# EUROPEAN PATENT SPECIFICATION

(11) **EP 3 582 205 B1**
(45) Date of publication and mention of the grant of the patent: **12.06.2024**
(21) Application number: 18750733.0
(22) Date of filing: 19.01.2018
(51) Int. Cl.: G08G 1/16, B60K 31/00, B60W 30/14, G08G 1/00, G08G 1/09, B60W 30/165, G08G 1/0967, G08G 1/0962

(54) **TRAVEL ASSISTANCE DEVICE, TRAVEL ASSISTANCE MANAGEMENT DEVICE AND METHOD THEREFOR, AND TRAVEL ASSISTANCE SYSTEM**
FAHRHILFEVORRICHTUNG, FAHRHILFEVERWALTUNGSVORRICHTUNG UND VERFAHREN DAFÜR SOWIE FAHRHILFESYSTEM
DISPOSITIF D'AIDE AU DÉPLACEMENT, DISPOSITIF ET PROCÉDÉ DE GESTION D'AIDE AU DÉPLACEMENT, ET SYSTÈME D'AIDE AU DÉPLACEMENT

(30) Priority: 09.02.2017 JP 2017021982
(43) Date of publication of application: 18.12.2019
(73) Proprietor: Sony Semiconductor Solutions Corporation, Atsugi-shi, Kanagawa 243-0014 (JP)
(72) Inventor: OBA, Eiji, Atsugi-shi Kanagawa 243-0014 (JP)
(74) Representative: Witte, Weller & Partner Patentanwälte mbB
(86) International application number: PCT/JP2018/001484
(87) International publication number: WO 2018/147041

(56) References cited:
- WO-A1-2016/113891
- WO-A1-2016/153408
- WO-A1-2016/170635
- JP-A- H11 306 490
- JP-A- 2002 123 894
- JP-A- 2006 344 032
- JP-A- 2007 008 332
- JP-A- 2007 176 396
- JP-A- 2015 132 996
- JP-A- 2017 010 586
- US-A1- 2016 054 735
- US-A1- 2016 267 796

## Description

### [Technical Field]

The present technology relates to a traveling assistance device, a traveling assistance management device, methods of same devices, and a traveling assistance system, each automatically and efficiently achieving following traveling.

### [Background Art]

Recently, development of such a system which automatically controls or assists traveling of a vehicle without operation by a driver has been promoted for purposes of improvement of vehicle traveling safety, reduction of loads imposed on the driver, and the like. For example, PTL 1 discloses a technology which recognizes a distance between an own vehicle and a proceeding vehicle or a proceeding vehicle traveling before the proceeding vehicle, and accelerates or decelerates the own vehicle in accordance with the recognized distance or acceleration or deceleration of the own vehicle on an assumption that the control is performed in a state that the driver is conscious of the proceeding vehicle or the vehicle before the proceeding vehicle.
WO 2016/153408 A1 discloses a device, a system and a method for an autonomous vehicle. The device is configured to determine a route for the autonomous vehicle, and to determine presence of any risk segment along the route. A risk segment is a segment of the road where the autonomous vehicle is determined to be in need of assistance based on characteristics of that road segment. If a risk segment is determined, the device is configured to perform a matching sequence in order to find a pilot vehicle capable of piloting the autonomous vehicle past the risk segment, and to generate information data about a result of the performed matching sequence.
US 2016/267796 A1 discloses a convoy travel control apparatus including: a communication portion; a travel control portion; and a joining control portion.
US 2016/054735 A1 discloses systems and methods for coordinating and controlling vehicles, for example heavy trucks, to follow closely behind each other, or linking, in a convenient, safe manner and thus to save significant amounts of fuel while increasing safety. In an embodiment, on-board controllers in each vehicle interact with vehicular sensors to monitor and control, for example, relative distance, relative acceleration/deceleration, and speed. Additional safety features in at least some embodiments include providing each driver with one or more visual displays of forward and rearward looking cameras. Long-range communications are provided for coordinating vehicles for linking, and for communicating analytics to fleet managers or others.
WO 2016/113891 A1 discloses a travel planning device including: a subject vehicle information acquisition unit that acquires subject vehicle information including a scheduled travel route and a scheduled departure time of a subject vehicle; an other vehicle information acquisition unit that acquires other vehicle information including information by which it is possible to predict scheduled travel routes of a plurality of other vehicles and a scheduled passage time through each point on the scheduled travel routes; and a travel plan calculator that calculates a travel plan of the subject vehicle based on the subject vehicle information and the other vehicle information. The travel plan calculator divides the scheduled travel route of the subject vehicle into manual driving sections and following travel sections, and selects the leading vehicle of each following travel section from among the plurality of other vehicles for each following travel section.

### [Citation List]

### [Patent Literature]

[PTL 1] Japanese Patent Application JP 2002-104015A

### [Summary]

### [Technical Problem]

Each of the proceeding vehicle and the vehicle before the proceeding vehicle travels independently of a destination of the own vehicle. It is therefore necessary to frequently switch the proceeding vehicle to another vehicle to achieve automatic following of a proceeding vehicle and reach the destination. In this case, efficient following traveling is difficult to perform.

Accordingly, an object of the present technology is to provide a traveling assistance device, a traveling assistance management device, methods of same devices, and a traveling assistance system each capable of automatically and efficiently performing following traveling.

### [Solution to Problem]

This problem is solved by a traveling assistance device, a traveling assistance method, a traveling assistance management device, a traveling assistance management method and a traveling assistance system according to the independent claims.

A first aspect of the present technology is directed to a traveling assistance device according to appended claim 1.

A second aspect of the present technology is directed to a traveling assistance method according to appended claim 7.

A third aspect of the present technology is directed to a traveling assistance management device according to appended claim 8.

### [Advantageous Effects of Invention]

According to this technology, the traveling control unit performs following traveling control for traveling while following a leading vehicle indicated by leading vehicle information acquired from the traveling assistance management device via the communication unit. The following traveling control is performed using outside-vehicle information acquired by the outside-vehicle information acquisition unit and the leading vehicle information. Moreover, the information processing unit selects, as a leading vehicle, a vehicle scheduled to travel in a traveling schedule route of the traveling assistance target vehicle at a traveling schedule time of the traveling assistance target vehicle from candidate vehicles in response to a request for leading vehicle information from the traveling assistance target vehicle, and notifies the traveling assistance target vehicle of leading vehicle information indicating the leading vehicle. Accordingly, following traveling is automatically and efficiently achievable. Effects described in the present description are presented only by way of example, wherefore effects to be produced are not limited to these effects, but may include additional effects.

### [Brief Description of Drawings]

[FIG. 1]

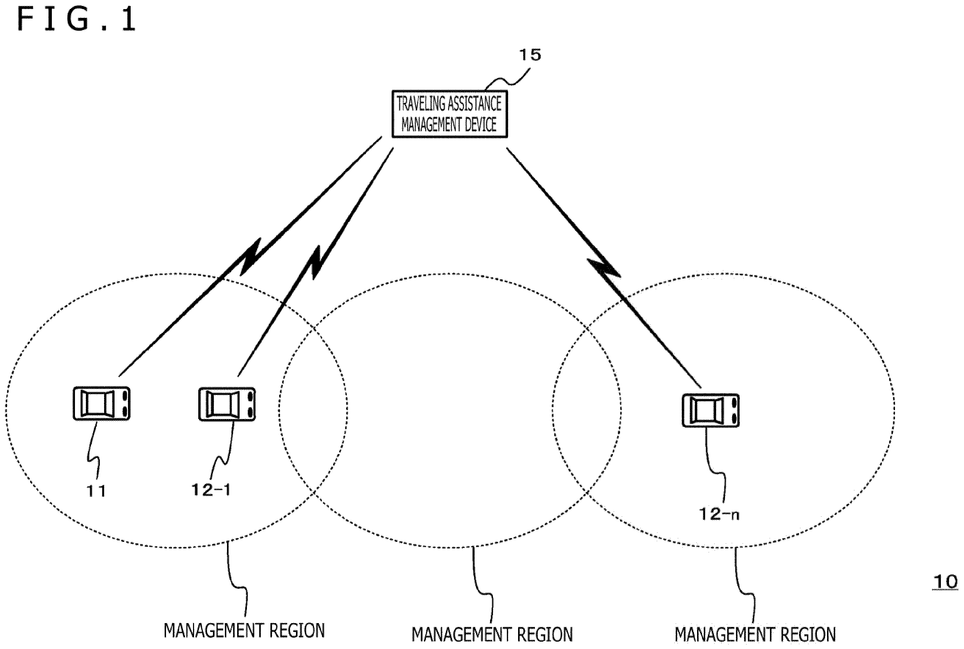

   FIG. 1 is a diagram explaining configuration of a traveling assistance system.
[FIG. 2]

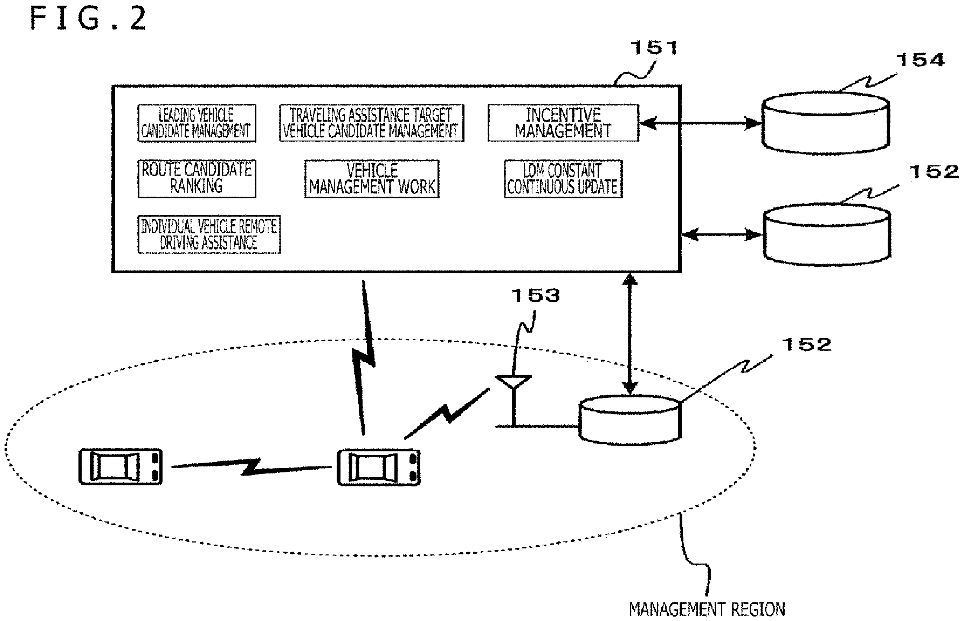

   FIG. 2 is a diagram depicting an example of functional configuration of a traveling assistance management device.
[FIG. 3]

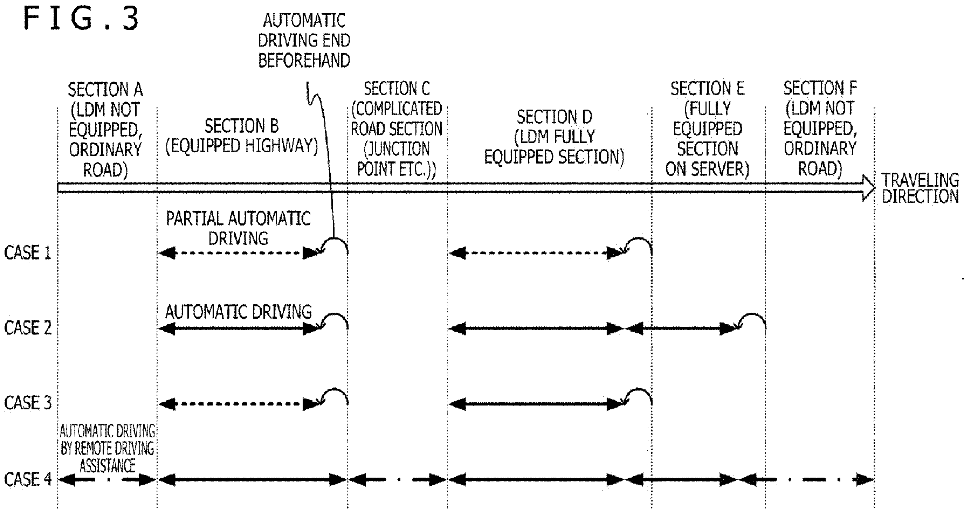

   FIG. 3 is a diagram explaining a preferred use case of the traveling assistance system.
[FIG. 4]

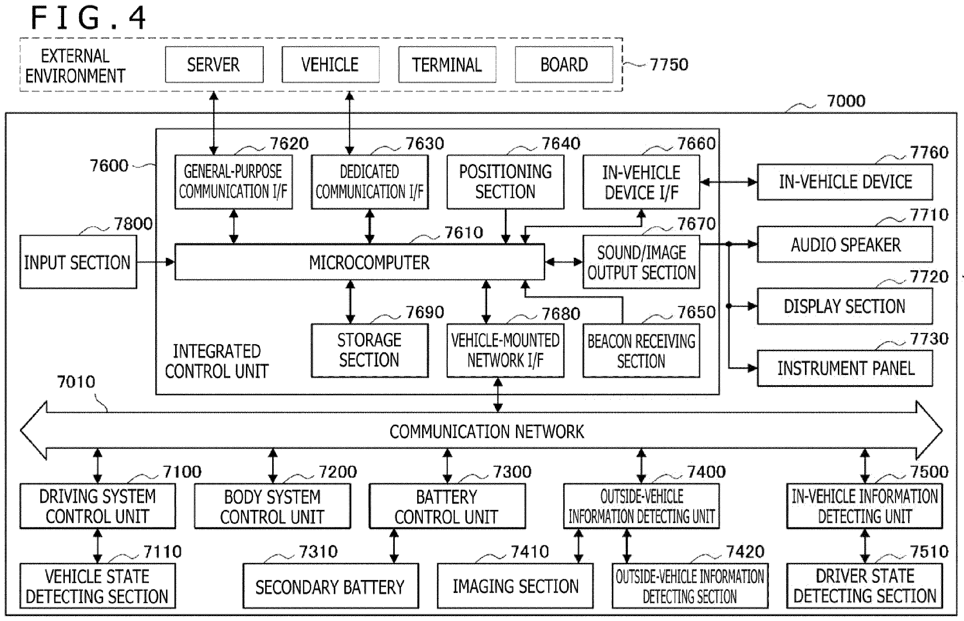

   FIG. 4 is a block diagram depicting an example of schematic configuration of a vehicle control system.
[FIG. 5]

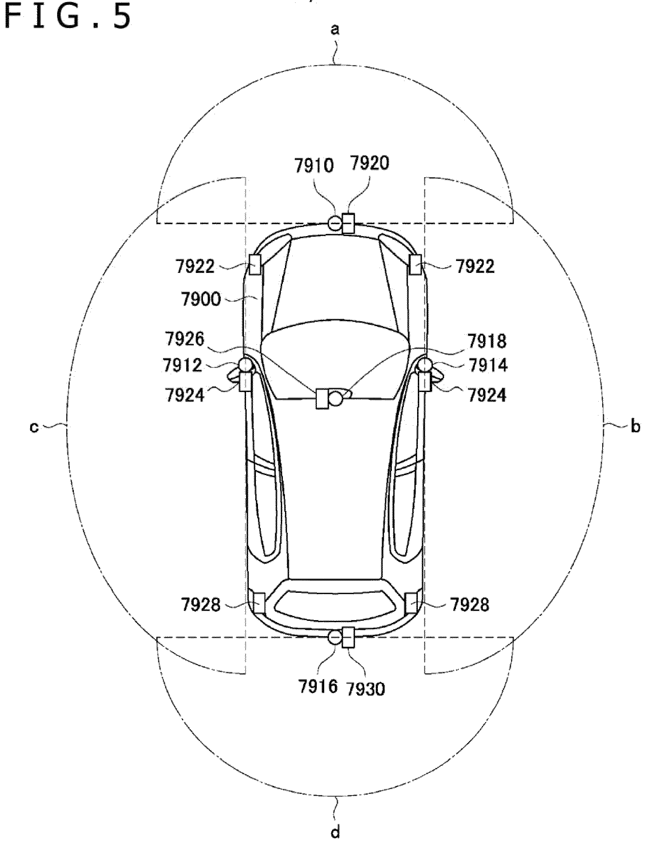

   FIG. 5 is a diagram of assistance in explaining an example of installation positions of an outside-vehicle information detecting section and an imaging section.
[FIG. 6]

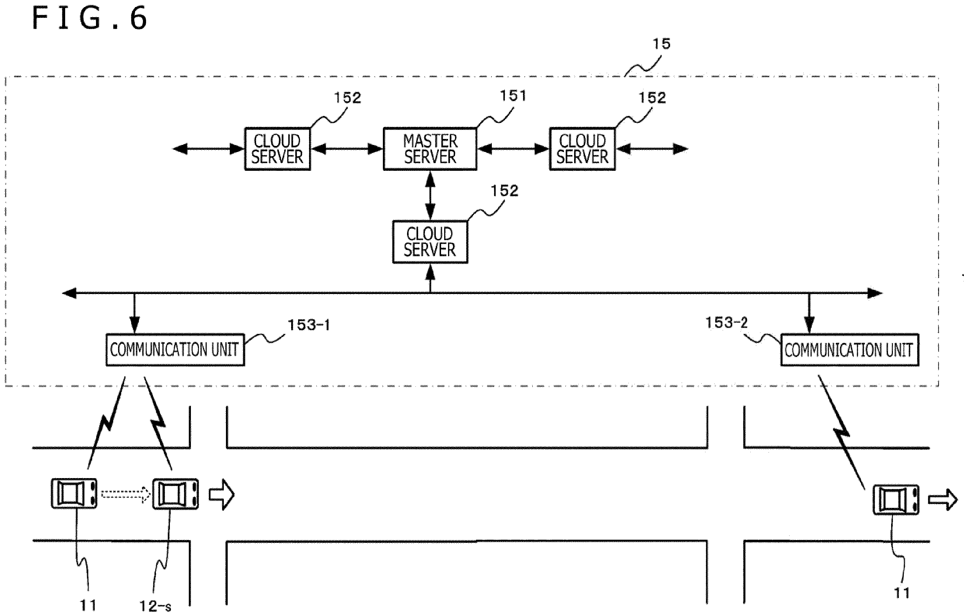

   FIG. 6 is a block diagram depicting an example of schematic configuration of the traveling assistance management device.
[FIG. 7]

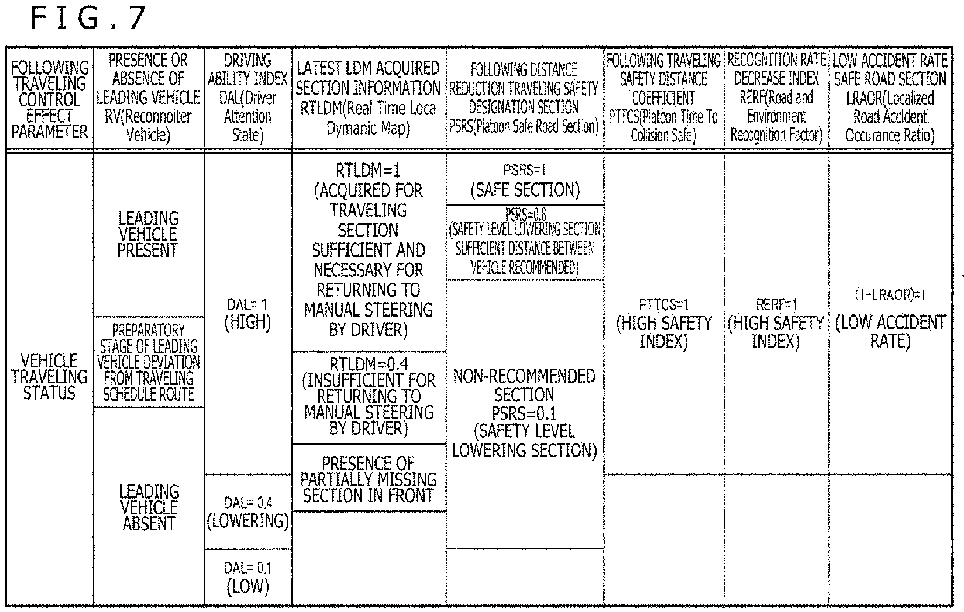

   FIG. 7 is a chart depicting an example of a relationship (1/2) between following traveling control effect parameters and vehicle traveling statuses.
[FIG. 8]

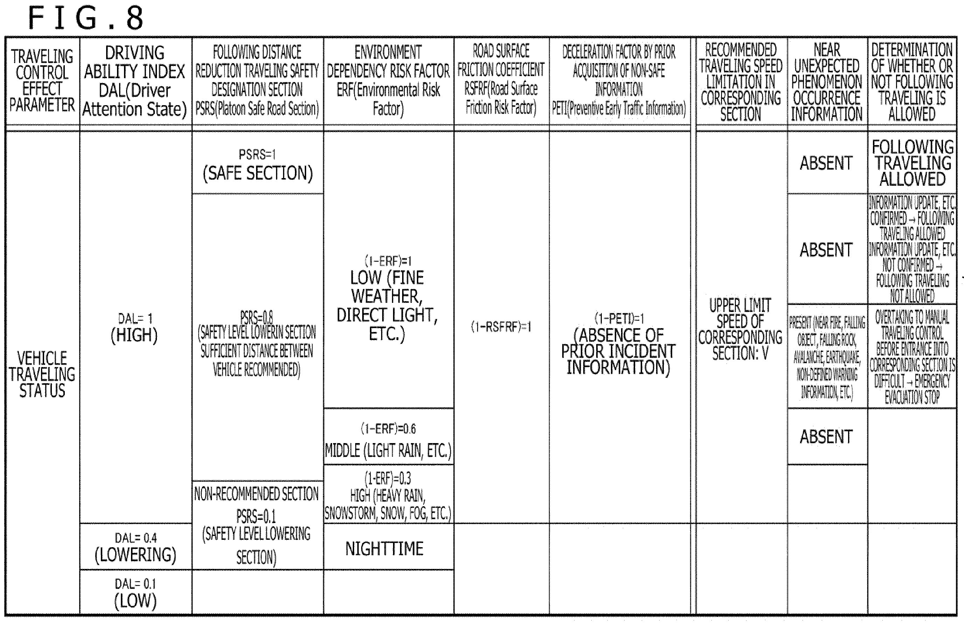

   FIG. 8 is a chart depicting another example of a relationship (2/2) between following traveling control effect parameters and vehicle traveling statuses.
[FIG. 9]

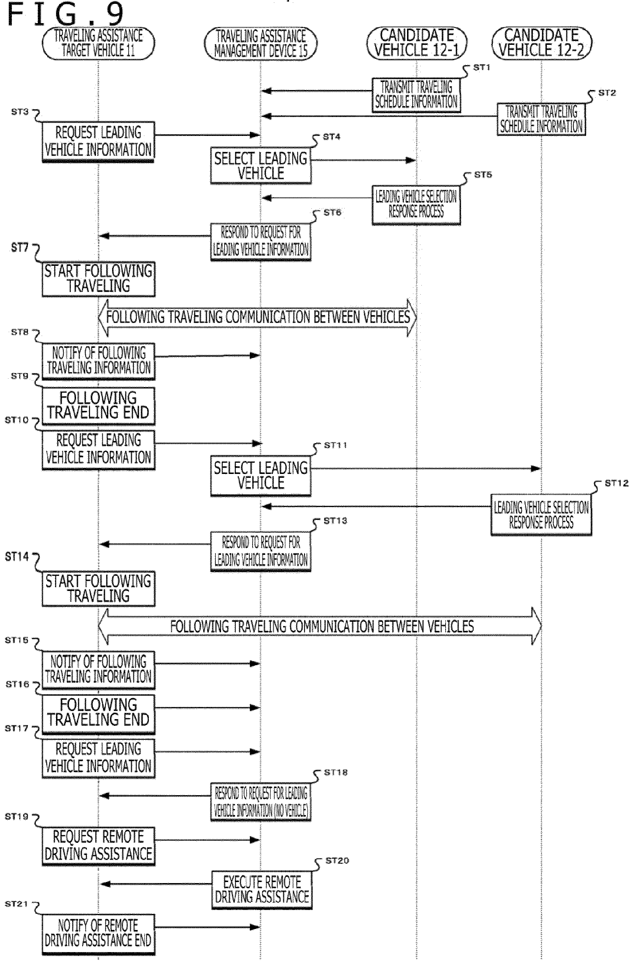

   FIG. 9 is a sequence diagram depicting an operation of the traveling assistance system.
[FIG. 10]

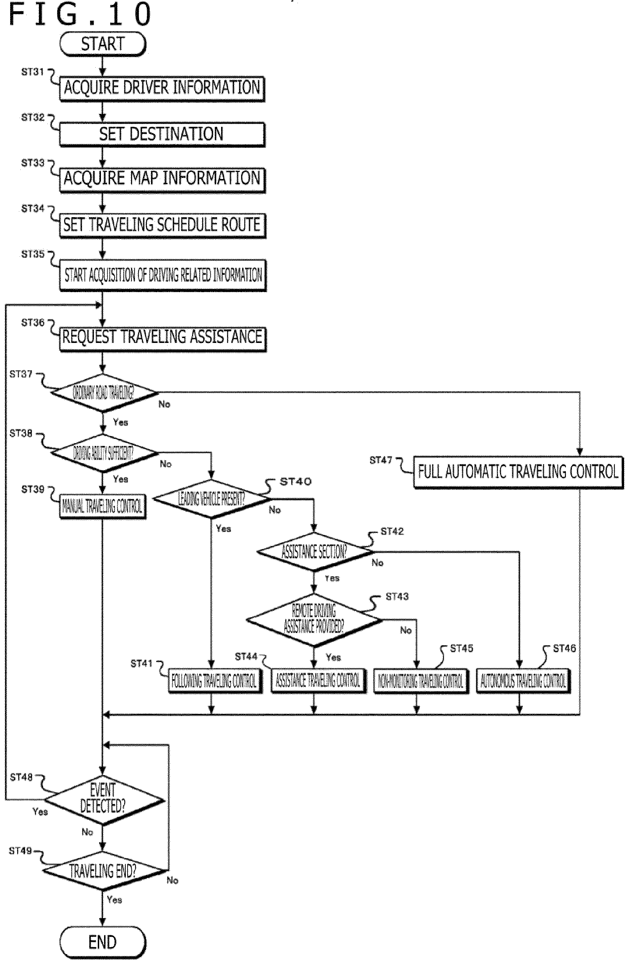

   FIG. 10 is a flowchart depicting an operation of a traveling assistance target vehicle.
[FIG. 11]

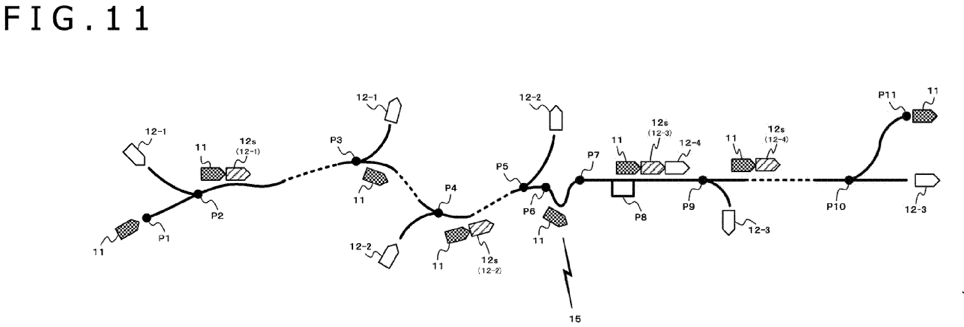

   FIG. 11 is a diagram explaining a traveling assistance operation.
[FIG. 12]

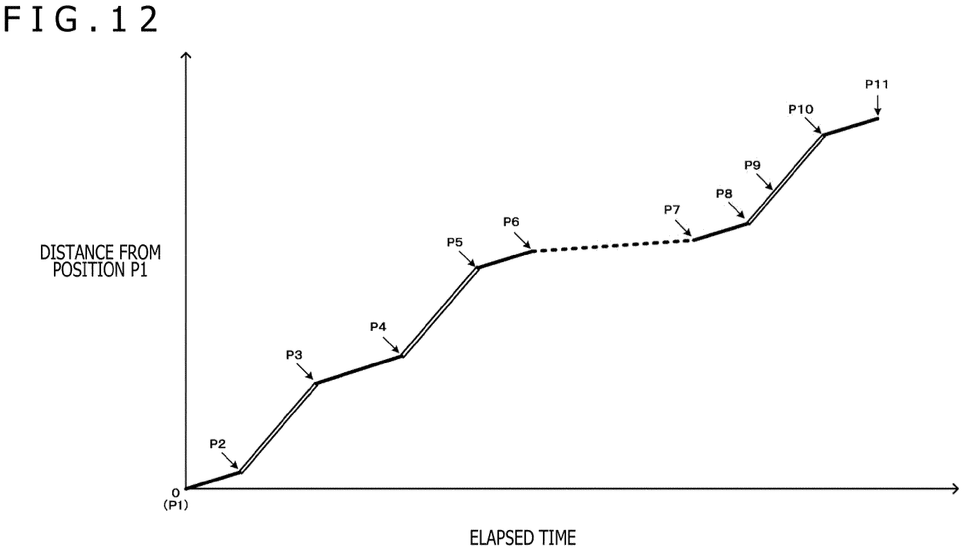

   FIG. 12 is a diagram depicting an example of a relationship between an elapsed time and a traveling distance in the traveling assistance operation.

### [Description of Embodiment]

A mode for carrying out the present technology is hereinafter described. Note that the description is presented in a following order.
1. Configuration of traveling assistance system
2. Configuration of vehicle and information management device
3. Operation of traveling assistance system

### <1. Configuration of traveling assistance system>

FIG. 1 is a diagram explaining configuration of a traveling assistance system. A traveling assistance system 10 includes a traveling assistance target vehicle 11, one or a plurality of candidate vehicles 12-1 to 12-n each capable of performing a traveling action of a leading vehicle, and a traveling assistance management device 15 which manages traveling assistance of the traveling assistance target vehicle 11 using the candidate vehicles 12-1 to 12-n.

When introduced to platooning of driving by large-sized distribution vehicles, for example, the traveling assistance system depicted in FIG. 1 is expected to achieve highly safe traveling while reducing a distance between vehicles, and produce effects such as considerable reduction of fuel consumption of a traveling vehicle together with reduction of air resistance. For achieving high safety, it is important to constantly provide prior information regarding a traveling road for platooning vehicles with high accuracy as latest correct information.

Social introduction of automatic driving has been actively investigated. For introduction of automatic driving, it is necessary to constantly update an environmental space map of a world space where a vehicle travels. More specifically, even in a case of a temporary limit of road use, such as construction and response to accident, or in a case where road surface conditions are difficult to recognize by a falling object, timely information update (what is called local dynamic map (LDM)) is essential.

However, a considerable volume of social infrastructure or the like needs to be provided to constantly update and provide road environment information, what is called local dynamic map described above, necessary and sufficient for traveling at a start of introduction of automatic driving vehicles on the current assumption. In this case, regions and roads sufficiently equipped with social infrastructure or the like are considered to be restricted to only limited areas even with increase in the number of automatic driving vehicles.

Accordingly, the traveling assistance system of the present invention travels while receiving assistance of information regarding LDM, which has been insufficiently provided, from another leading traveling vehicle during traveling of a vehicle in a desired route of automatic driving operation to achieve automatic driving of a following vehicle based on information provided from a leading vehicle even in a section not equipped with an environment of LDM. In other words, traveling is achievable through a variety of complicated sections including not equipped with LDM in the course of a target route. Effective automatic driving is made available in a long-distance and wide-range shift by alternately and appropriately switching between automatic driving sections and manual driving sections in accordance with environmental equipment and occasional conditions of roads under development of an environmental equipment allowing automatic driving in an introduction period when regions and sections allowing automatic driving are only partially present, and by compensating for driving by a driver in sections not sufficiently equipped.

The traveling assistance target vehicle 11 including a traveling assistance device is configured to perform not only a manual driving function, but also a traveling schedule notification function, an assistance request function, and an automatic driving function. The traveling assistance device includes an outside-vehicle information acquisition unit which acquires outside-vehicle information, a communication unit which communicates with the traveling assistance management device providing leading vehicle information, and a traveling control unit which performs controls such as following traveling control for traveling while following a leading vehicle indicated by the leading vehicle information acquired from the traveling assistance management device. The following traveling control is performed using the outside-vehicle information acquired by the outside-vehicle information acquisition unit and the leading vehicle information. The traveling assistance target vehicle 11 performs the traveling schedule notification function for notifying the traveling assistance management device 15 of a traveling schedule route and a traveling time, for example. The traveling assistance target vehicle 11 may also perform the traveling schedule notification function for notifying the candidate vehicle of the traveling schedule route, for example. The traveling assistance target vehicle 11 performs the assistance request function for requesting the candidate vehicle to perform a traveling action of a leading vehicle, or requesting the traveling assistance management device 15 to issue leading vehicle information for performing a traveling action of a leading vehicle, for example. The traveling assistance target vehicle 11 performs the automatic driving function for achieving automatic driving to a destination in the traveling schedule route. The automatic driving includes automatic traveling following a candidate vehicle having received the request for the traveling action of the leading vehicle (hereinafter referred to as "leading vehicle 12s"), and automatic traveling following a candidate vehicle having received the request for the traveling action indicated by the leading vehicle information supplied from the traveling assistance management device 15 (corresponding to "leading vehicle 12s" described above).

Each of the candidate vehicles 12-1 to 12-n has a traveling schedule notification function and an automatic driving assistance function. The candidate vehicle 12 performs the traveling schedule notification function for notifying the traveling assistance management device 15 of a traveling schedule route and a traveling time, for example. Each of the candidate vehicles 12-1 to 12-n may also perform the traveling schedule notification function for notifying the traveling assistance target vehicle 11 of the traveling schedule route, for example. Each of the candidate vehicles 12-1 to 12-n performs the automatic driving assistance function for approving a request for a traveling action of a leading vehicle received from the traveling assistance target vehicle 11 or the traveling assistance management device 15, and performs the traveling action of the leading vehicle to assist traveling of the traveling assistance target vehicle 11, for example. The automatic driving assistance function may also transmit traveling environment information acquired by the candidate vehicles 12-1 to 12-n to the traveling assistance target vehicle 11.

The leading vehicle 12s includes a camera, and various types of sensors such as Radar, Lidar, TOF, and ultrasonic sensor, and acquires a road environment during traveling. The leading vehicle 12s also includes a transmission unit for transmitting the acquired road environment information to the traveling assistance management device 15. Alternatively, the leading vehicle 12s may directly transmit supplement of local dynamic map or substituted information to the traveling assistance target vehicle.

The traveling assistance management device 15 sections a travelable area into a plurality of management regions, and manages a traveling assistance target vehicle and candidate vehicles for each management region The traveling assistance management device 15 also gives, for example, tag information or the like concerning the traveling assistance target vehicle and the candidate vehicles, and continues traveling assistance management even when the traveling assistance target vehicle or the candidate vehicles shift between the management regions.

The traveling assistance management device 15 has a traveling schedule acquisition function and an assistance management function. The traveling assistance management device 15 performs the traveling schedule acquisition function for acquiring a traveling schedule route and a traveling time from the traveling assistance target vehicle 11 and the candidate vehicles 12-1 to 12-n, for example. The traveling assistance management device 15 also performs the assistance management function for selecting, from the candidate vehicles 12-1 to 12-n, a candidate vehicle having a traveling schedule route identical to that route of the traveling assistance target vehicle 11, and a traveling time within a predetermined time range for the traveling time of the traveling assistance target vehicle 11 in response to a request issued from the traveling assistance target vehicle 11 for acquiring leading vehicle information regarding a vehicle performing a traveling action of a leading vehicle. The traveling assistance management device 15 subsequently requests the selected candidate vehicle to perform the traveling action of the leading vehicle, designates the candidate vehicle having received the request as the leading vehicle 12s, and notifies the traveling assistance target vehicle 11 of leading vehicle information regarding the leading vehicle 12s. The traveling assistance management device 15 may also have an information management function for managing leading vehicle traveling information. For example, the traveling assistance management device 15 performs the information management function for acquiring leading vehicle use information indicating a use status of the leading vehicle, such as specific information indicating the leading vehicle 12s, and information indicating a traveling distance, a time or the like for following the leading vehicle 12s, from the traveling assistance target vehicle 11, and manages traveling performance as the leading vehicle for each candidate vehicle to give an incentive to the candidate vehicle or an owner of the candidate vehicle in accordance with the traveling performance as the leading vehicle.

FIG. 2 depicts an example of functional configuration of the traveling assistance management device. As depicted in FIG. 2 and FIG. 6 referred to below, the traveling assistance management device 15 includes a master server 151, a local server (or cloud server) 152 connected to the master server 151 and provided for each management region, and a communication unit 153 connected to the local server 152, for example. The traveling assistance management device 15 may further include an incentive management server 154.

The master server 151 has management functions such as leading vehicle candidate management, traveling assistance target vehicle candidate management, insensitive management, and route candidate management. The master server 151 further performs vehicle management work, LDM update work, individual vehicle remote driving assistance work, and others.

The leading vehicle candidate management collectively manages vehicles corresponding to leading vehicle candidates. The traveling assistance target vehicle candidate management collectively manages vehicles corresponding to traveling assistance target vehicle candidates. The insensitive management collectively manages an incentive given to each leading vehicle which leads one motorcade. For example, the insensitive management sums up traveling histories or the like of leading vehicles for each month or each fixed period to receive points or services such as discounts. Information concerning insensitive may be collectively managed by the incentive management server 154. The route candidate management manages desired routes included in a plurality of routes in rank order. For example, the route candidate management determines ranking based on a safety level, a route making a detour but passing through sections requiring only minimum manual driving time, and a route allowing traveling by automatic driving under surveillance. Ranking may be determined in accordance with conditions and shift purposes of a driver.

The vehicle management work collectively manages pairing of a traveling assistance target vehicle candidate and a leading vehicle candidate selected from a plurality of leading vehicle candidates. The LDM update work collectively manages road environment information acquired by a leading vehicle and uploaded to a server. For example, the LDM update work constantly updates latest road environment information (e.g., visibility of white line) for each route. The LDM update work also transmits updated information to respective leading vehicles as necessary. The individual vehicle remote driving assistance performs driving assistance by remote operation in response to a request to achieve automatic driving of a vehicle for which no leading vehicle is found.

Preferred use cases of the traveling assistance system depicted in FIG. 1 are now described with reference to FIG. 3. It is assumed in FIG. 3 that a vehicle travels in an order of sections A, B, C, D, E, and F. The section A is an ordinary road not equipped with LDM. The section B is an equipped highway. The section C is a complicated road section where traveling becomes complicated, such as a junction point. The section D is an LDM fully equipped section where latest information is constantly and securely provided. The section E is a fully equipped section on a server, as a section fully equipped with LDM but not constantly provided with latest information. The section F is an ordinary road not equipped with LDM.

Case 1 is a case where the traveling assistance target vehicle 11 has an ADAS function such as ACC, but does not have the automatic driving function. Case 2 is a case where the traveling assistance target vehicle 11 has the automatic driving function in the presence of a leading vehicle. Case 3 is a case where the traveling assistance target vehicle 11 has the automatic driving function in the absence of a leading vehicle. Case 4 is a case where the traveling assistance target vehicle 11 has the automatic driving function under individual vehicle remote driving assistance.

Practicability of automatic driving of the traveling assistance target vehicle 11 is controlled based on respective situations of Cases 1, 2, 3, and 4. Any of Cases 1, 2, 3, and 4 corresponding to the current situation may be determined either by an ECU inside the traveling assistance target vehicle 11, or by the traveling assistance management device 15.

Each solid line in FIG. 3 indicates an automatic driving allowed section. The automatic driving allowed section is a section where traveling is achievable without a necessity of steering by the driver. Each broken line in the figure indicates a partial automatic driving allowed section. The partial automatic driving allowed section is a section where automatic driving is performed with a necessity of constant steering by the driver, for example, in a caution condition for constant manual driving response to an emergent phenomenon by the driver. Each chain line in the figure indicates a traveling assistance automatic driving allowed section. The traveling assistance automatic driving allowed section is a section where automatic driving is allowed while receiving remote driving assistance from the traveling assistance management device 15.

For example, in Case 1, partial automatic driving is performed in the equipped highway and the LDM fully equipped section where latest information is constantly and securely provided. In Case 2, automatic driving is performed in the equipped highway and the LDM fully equipped section where latest information is constantly and securely provided. Moreover, the section E, which is a fully equipped section on the server, is a section where basically latest information is not constantly provided, and therefore is not basically suited for independent automatic driving. However, Case 2 described above is defined as a case where a leading vehicle is present, wherefore automatic driving is performed in Case 2 including the section E. In Case 3, partial automatic driving is performed in the equipped highway, while automatic driving is performed in the LDM fully equipped section. In a case where a manual driving section such as a complicated road section approaches during traveling in the automatic driving allowed section or the partial automatic driving allowed section, driving is switched to manual driving in an early stage to secure a time for preparing manual driving by the driver. In Case 4, automatic driving with remote driving assistance is allowed by receiving remote driving assistance from the traveling assistance management device 15 in the section not equipped with LDM or the driving complicated section. According to an actual use case, the driver performs autonomous automatic driving at a low speed even in a section not suited for automatic driving, without steering by the driver in all sections when the driver, who is a vulnerable road user at a remote place in a physical condition not suited for normal driving, goes to hospital. In a case of a phenomenon difficult to cope with by low-speed autonomous traveling, the driver passes through the corresponding section while receiving remote driving assistance including human determination to achieve shift through all the sections. More specifically as depicted in Case 2 or Case 4, the condition of the presence or absence of a leading person, or the presence or absence of remote assistance may expand the section where steering by the driver is not required during automatic driving. Accordingly, a system user of automatic driving can receive benefits of automatic driving even without completion of constant update of equipment of LDM widely and socially. In this case, a shift range achieved by automatic driving is expanded to a farther distant range, wherefore advantages can be offered even without completion of equipment of socially high-level LDM update environment throughout the range. In other words, as a secondary effect produced by introduction of the mechanism to the present invention, an automatic driving available range expands with reduction of social infrastructure investment per traveling distance, thereby achieving promoting effect of introduction of automatic driving hand.

### <2. Configuration of vehicle and information management device>

FIG. 4 is a block diagram depicting an example of schematic configuration of the vehicle control system included in the traveling assistance target vehicle and the candidate vehicle.

The vehicle control system 7000 includes a plurality of electronic control units connected to each other via a communication network 7010. In the example depicted in FIG. 4, the vehicle control system 7000 includes a driving system control unit 7100, a body system control unit 7200, a battery control unit 7300, an outside-vehicle information detecting unit 7400, an in-vehicle information detecting unit 7500, and an integrated control unit 7600. The communication network 7010 connecting the plurality of control units to each other may, for example, be a vehicle-mounted communication network compliant with an arbitrary standard such as controller area network (CAN), local interconnect network (LIN), local area network (LAN), FlexRay, or the like.

Each of the control units includes: a microcomputer that performs arithmetic processing according to various kinds of programs; a storage section that stores the programs executed by the microcomputer, parameters used for various kinds of operations, or the like; and a driving circuit that drives various kinds of control target devices. Each of the control units further includes: a network interface (I/F) for performing communication with other control units via the communication network 7010; and a communication I/F for performing communication with a device, a sensor, or the like within and without the vehicle by wire communication or radio communication. A functional configuration of the integrated control unit 7600 illustrated in FIG. 4 includes a microcomputer 7610, a general-purpose communication I/F 7620, a dedicated communication I/F 7630, a positioning section 7640, a beacon receiving section 7650, an in-vehicle device I/F 7660, a sound/image output section 7670, a vehicle-mounted network I/F 7680, and a storage section 7690. The other control units similarly include a microcomputer, a communication I/F, a storage section, and the like.

The driving system control unit 7100 controls the operation of devices related to the driving system of the vehicle in accordance with various kinds of programs. For example, the driving system control unit 7100 functions as a control device for a driving force generating device for generating the driving force of the vehicle, such as an internal combustion engine, a driving motor, or the like, a driving force transmitting mechanism for transmitting the driving force to wheels, a steering mechanism for adjusting the steering angle of the vehicle, a braking device for generating the braking force of the vehicle, and the like. The driving system control unit 7100 may have a function as a control device of an antilock brake system (ABS), electronic stability control (ESC), or the like.

The driving system control unit 7100 is connected with a vehicle state detecting section 7110. The vehicle state detecting section 7110, for example, includes at least one of a gyro sensor that detects the angular velocity of axial rotational movement of a vehicle body, an acceleration sensor that detects the acceleration of the vehicle, and sensors for detecting an amount of operation of an accelerator pedal, an amount of operation of a brake pedal, the steering angle of a steering wheel, an engine speed or the rotational speed of wheels, and the like. The driving system control unit 7100 performs arithmetic processing using a signal input from the vehicle state detecting section 7110, and controls the internal combustion engine, the driving motor, an electric power steering device, the brake device, and the like.

The body system control unit 7200 controls the operation of various kinds of devices provided to the vehicle body in accordance with various kinds of programs For example, the body system control unit 7200 functions as a control device for a keyless entry system, a smart key system, a power window device, or various kinds of lamps such as a headlamp, a backup lamp, a brake lamp, a turn signal, a fog lamp, or the like. In this case, radio waves transmitted from a mobile device as an alternative to a key or signals of various kinds of switches can be input to the body system control unit 7200. The body system control unit 7200 receives these input radio waves or signals, and controls a door lock device, the power window device, the lamps, or the like of the vehicle.

The battery control unit 7300 controls a secondary battery 7310, which is a power supply source for the driving motor, in accordance with various kinds of programs. For example, the battery control unit 7300 is supplied with information about a battery temperature, a battery output voltage, an amount of charge remaining in the battery, or the like from a battery device including the secondary battery 7310. The battery control unit 7300 performs arithmetic processing using these signals, and performs control for regulating the temperature of the secondary battery 7310 or controls a cooling device provided to the battery device or the like.

The outside-vehicle information detecting unit 7400 detects information about the outside of the vehicle including the vehicle control system 7000. For example, the outside-vehicle information detecting unit 7400 is connected with at least one of an imaging section 7410 and an outside-vehicle information detecting section 7420 The imaging section 7410 includes at least one of a time-of-flight (ToF) camera, a stereo camera, a monocular camera, an infrared camera, and other cameras. The outside-vehicle information detecting section 7420, for example, includes at least one of an environmental sensor for detecting current atmospheric conditions or weather conditions and a peripheral information detecting sensor for detecting another vehicle, an obstacle, a pedestrian, or the like on the periphery of the vehicle including the vehicle control system 7000.

The environmental sensor, for example, may be at least one of a rain drop sensor detecting rain, a fog sensor detecting a fog, a sunshine sensor detecting a degree of sunshine, and a snow sensor detecting a snowfall. The peripheral information detecting sensor may be at least one of an ultrasonic sensor, a radar device, and a LIDAR device (Light detection and Ranging device, or Laser imaging detection and ranging device). Each of the imaging section 7410 and the outside-vehicle information detecting section 7420 may be provided as an independent sensor or device, or may be provided as a device in which a plurality of sensors or devices are integrated.

FIG. 5 depicts an example of installation positions of the imaging section and the outside-vehicle information detecting section. Imaging sections 7910, 7912, 7914, 7916, and 7918 are, for example, disposed at at least one of positions on a front nose, sideview mirrors, a rear bumper, and a back door of the vehicle 7900 and a position on an upper portion of a windshield within the interior of the vehicle. The imaging section 7910 provided to the front nose and the imaging section 7918 provided to the upper portion of the windshield within the interior of the vehicle obtain mainly an image of the front of the vehicle 7900. The imaging sections 7912 and 7914 provided to the sideview mirrors obtain mainly an image of the sides of the vehicle 7900. The imaging section 7916 provided to the rear bumper or the back door obtains mainly an image of the rear of the vehicle 7900. The imaging section 7918 provided to the upper portion of the windshield within the interior of the vehicle is used mainly to detect a leading vehicle, a pedestrian, an obstacle, a signal, a traffic sign, a lane, or the like.

Incidentally, FIG. 5 depicts an example of photographing ranges of the respective imaging sections 7910, 7912, 7914, and 7916. An imaging range a represents the imaging range of the imaging section 7910 provided to the front nose. Imaging ranges b and c respectively represent the imaging ranges of the imaging sections 7912 and 7914 provided to the sideview mirrors. An imaging range d represents the imaging range of the imaging section 7916 provided to the rear bumper or the back door A bird's-eye image of the vehicle 7900 as viewed from above can be obtained by superimposing image data imaged by the imaging sections 7910, 7912, 7914, and 7916, for example.

Outside-vehicle information detecting sections 7920, 7922, 7924, 7926, 7928, and 7930 provided to the front, rear, sides, and corners of the vehicle 7900 and the upper portion of the windshield within the interior of the vehicle may be, for example, an ultrasonic sensor or a radar device. The outside-vehicle information detecting sections 7920, 7926, and 7930 provided to the front nose of the vehicle 7900, the rear bumper, the back door of the vehicle 7900, and the upper portion of the windshield within the interior of the vehicle may be a LIDAR device, for example. These outside-vehicle information detecting sections 7920 to 7930 are used mainly to detect a leading vehicle, a pedestrian, an obstacle, or the like.

Returning to FIG. 4, the description will be continued. The outside-vehicle information detecting unit 7400 makes the imaging section 7410 image an image of the outside of the vehicle, and receives imaged image data. In addition, the outside-vehicle information detecting unit 7400 receives detection information from the outside-vehicle information detecting section 7420 connected to the outside-vehicle information detecting unit 7400. In a case where the outside-vehicle information detecting section 7420 is an ultrasonic sensor, a radar device, or a LIDAR device, the outside-vehicle information detecting unit 7400 transmits an ultrasonic wave, an electromagnetic wave, or the like, and receives information of a received reflected wave. On the basis of the received information, the outside-vehicle information detecting unit 7400 may perform processing of detecting an object such as a human, a vehicle, an obstacle, a sign, a character on a road surface, or the like, or processing of detecting a distance thereto. The outside-vehicle information detecting unit 7400 may perform environment recognition processing of recognizing a rainfall, a fog, road surface conditions, or the like on the basis of the received information. The outside-vehicle information detecting unit 7400 may calculate a distance to an object outside the vehicle on the basis of the received information.

In addition, on the basis of the received image data, the outside-vehicle information detecting unit 7400 may perform image recognition processing of recognizing a human, a vehicle, an obstacle, a sign, a character on a road surface, or the like, or processing of detecting a distance thereto. The outside-vehicle information detecting unit 7400 may subject the received image data to processing such as distortion correction, alignment, or the like, and combine the image data imaged by a plurality of different imaging sections 7410 to generate a bird's-eye image or a panoramic image. The outside-vehicle information detecting unit 7400 may perform viewpoint conversion processing using the image data imaged by the imaging section 7410 including the different imaging parts.

The in-vehicle information detecting unit 7500 detects information about the inside of the vehicle. The in-vehicle information detecting unit 7500 is, for example, connected with a driver state detecting section 7510 that detects the state of a driver. The driver state detecting section 7510 may include a camera that images the driver, a biosensor that detects biological information of the driver, a microphone that collects sound within the interior of the vehicle, or the like. The biosensor is, for example, disposed in a seat surface, the steering wheel, or the like, and detects biological information of an occupant sitting in a seat or the driver holding the steering wheel. On the basis of detection information input from the driver state detecting section 7510, the in-vehicle information detecting unit 7500 may calculate a degree of fatigue of the driver or a degree of concentration of the driver, or may determine whether the driver is dozing. The in-vehicle information detecting unit 7500 may subject an audio signal obtained by the collection of the sound to processing such as noise canceling processing or the like

The integrated control unit 7600 controls general operation within the vehicle control system 7000 in accordance with various kinds of programs. The integrated control unit 7600 is connected with an input section 7800 The input section 7800 is implemented by a device capable of input operation by an occupant, such, for example, as a touch panel, a button, a microphone, a switch, a lever, or the like. The integrated control unit 7600 may be supplied with data obtained by voice recognition of voice input through the microphone. The input section 7800 may, for example, be a remote control device using infrared rays or other radio waves, or an external connecting device such as a mobile telephone, a personal digital assistant (PDA), or the like that supports operation of the vehicle control system 7000. The input section 7800 may be, for example, a camera. In that case, an occupant can input information by gesture. Alternatively, data may be input which is obtained by detecting the movement of a wearable device that an occupant wears. Further, the input section 7800 may, for example, include an input control circuit or the like that generates an input signal on the basis of information input by an occupant or the like using the above-described input section 7800, and which outputs the generated input signal to the integrated control unit 7600. An occupant or the like inputs various kinds of data or gives an instruction for processing operation to the vehicle control system 7000 by operating the input section 7800.

The storage section 7690 may include a read only memory (ROM) that stores various kinds of programs executed by the microcomputer and a random access memory (RAM) that stores various kinds of parameters, operation results, sensor values, or the like. In addition, the storage section 7690 may be implemented by a magnetic storage device such as a hard disc drive (HDD) or the like, a semiconductor storage device, an optical storage device, a magneto-optical storage device, or the like.

The general-purpose communication I/F 7620 is a communication I/F used widely, which communication I/F mediates communication with various apparatuses present in an external environment 7750. The general-purpose communication I/F 7620 may implement a cellular communication protocol such as global system for mobile communications (GSM), worldwide interoperability for microwave access (WiMAX), long term evolution (LTE)), LTE-advanced (LTE-A), or the like, or another wireless communication protocol such as wireless LAN (referred to also as wireless fidelity (Wi-Fi), Bluetooth, or the like. The general-purpose communication I/F 7620 may, for example, connect to an apparatus (for example, an application server or a control server) present on an external network (for example, the Internet, a cloud network, or a company-specific network) via a base station or an access point. In addition, the general-purpose communication I/F 7620 may connect to a terminal present in the vicinity of the vehicle (which terminal is, for example, a terminal of the driver, a pedestrian, or a store, or a machine type communication (MTC) terminal) using a peer to peer (P2P) technology, for example.

The dedicated communication I/F 7630 is a communication I/F that supports a communication protocol developed for use in vehicles. The dedicated communication I/F 7630 may implement a standard protocol such, for example, as wireless access in vehicle environment (WAVE), which is a combination of institute of electrical and electronic engineers (IEEE) 802.11p as a lower layer and IEEE 1609 as a higher layer, dedicated short range communications (DSRC), or a cellular communication protocol. The dedicated communication I/F 7630 typically carries out V2X communication as a concept including one or more of communication between a vehicle and a vehicle (Vehicle to Vehicle), communication between a road and a vehicle (Vehicle to Infrastructure), communication between a vehicle and a home (Vehicle to Home), and communication between a pedestrian and a vehicle (Vehicle to Pedestrian).

The positioning section 7640, for example, performs positioning by receiving a global navigation satellite system (GNSS) signal from a GNSS satellite (for example, a GPS signal from a global positioning system (GPS) satellite), and generates positional information including the latitude, longitude, and altitude of the vehicle. Incidentally, the positioning section 7640 may identify a current position by exchanging signals with a wireless access point, or may obtain the positional information from a terminal such as a mobile telephone, a personal handyphone system (PHS), or a smart phone that has a positioning function.

The beacon receiving section 7650, for example, receives a radio wave or an electromagnetic wave transmitted from a radio station installed on a road or the like, and thereby obtains information about the current position, congestion, a closed road, a necessary time, or the like. Incidentally, the function of the beacon receiving section 7650 may be included in the dedicated communication I/F 7630 described above.

The in-vehicle device I/F 7660 is a communication interface that mediates connection between the microcomputer 7610 and various in-vehicle devices 7760 present within the vehicle. The in-vehicle device I/F 7660 may establish wireless connection using a wireless communication protocol such as wireless LAN, Bluetooth, near field communication (NFC), or wireless universal serial bus (WUSB). In addition, the in-vehicle device I/F 7660 may establish wired connection by universal serial bus (USB), high-definition multimedia interface (HDMI), mobile high-definition link (MHL), or the like via a connection terminal (and a cable if necessary) not depicted in the figures. The in-vehicle devices 7760 may, for example, include at least one of a mobile device and a wearable device possessed by an occupant and an information device carried into or attached to the vehicle. The in-vehicle devices 7760 may also include a navigation device that searches for a path to an arbitrary destination. The in-vehicle device I/F 7660 exchanges control signals or data signals with these in-vehicle devices 7760.

The vehicle-mounted network I/F 7680 is an interface that mediates communication between the microcomputer 7610 and the communication network 7010. The vehicle-mounted network I/F 7680 transmits and receives signals or the like in conformity with a predetermined protocol supported by the communication network 7010.

The microcomputer 7610 of the integrated control unit 7600 controls the vehicle control system 7000 in accordance with various kinds of programs on the basis of information obtained via at least one of the general-purpose communication I/F 7620, the dedicated communication I/F 7630, the positioning section 7640, the beacon receiving section 7650, the in-vehicle device I/F 7660, and the vehicle-mounted network I/F 7680. For example, the microcomputer 7610 may calculate a control target value for the driving force generating device, the steering mechanism, or the braking device on the basis of the obtained information about the inside and outside of the vehicle, and output a control command to the driving system control unit 7100. For example, the microcomputer 7610 may perform cooperative control intended to implement functions of an advanced driver assistance system (ADAS) which functions include collision avoidance or shock mitigation for the vehicle, following driving based on a following distance, vehicle speed maintaining driving, a warning of collision of the vehicle, a warning of deviation of the vehicle from a lane, or the like. In addition, the microcomputer 7610 may perform cooperative control intended for automatic driving, which makes the vehicle to travel autonomously without depending on the operation of the driver, or the like, by controlling the driving force generating device, the steering mechanism, the braking device, or the like on the basis of the obtained information about the surroundings of the vehicle.

The microcomputer 7610 may generate three-dimensional distance information between the vehicle and an object such as a surrounding structure, a person, or the like, and generate local map information including information about the surroundings of the current position of the vehicle, on the basis of information obtained via at least one of the general-purpose communication I/F 7620, the dedicated communication I/F 7630, the positioning section 7640, the beacon receiving section 7650, the in-vehicle device I/F 7660, and the vehicle-mounted network I/F 7680. In addition, the microcomputer 7610 may predict danger such as collision of the vehicle, approaching of a pedestrian or the like, an entry to a closed road, or the like on the basis of the obtained information, and generate a warning signal. The warning signal may, for example, be a signal for producing a warning sound or lighting a warning lamp.

The sound/image output section 7670 transmits an output signal of at least one of a sound and an image to an output device capable of visually or auditorily notifying information to an occupant of the vehicle or the outside of the vehicle. In the example of FIG. 4, an audio speaker 7710, a display section 7720, and an instrument panel 7730 are illustrated as the output device. The display section 7720 may, for example, include at least one of an on-board display and a head-up display. The display section 7720 may have an augmented reality (AR) display function. The output device may be other than these devices, and may be another device such as headphones, a wearable device such as an eyeglass type display worn by an occupant or the like, a projector, a lamp, or the like. In a case where the output device is a display device, the display device visually displays results obtained by various kinds of processing performed by the microcomputer 7610 or information received from another control unit in various forms such as text, an image, a table, a graph, or the like. In addition, in a case where the output device is an audio output device, the audio output device converts an audio signal constituted of reproduced audio data or sound data or the like into an analog signal, and auditorily outputs the analog signal.

Incidentally, at least two control units connected to each other via the communication network 7010 in the example depicted in FIG. 4 may be integrated into one control unit. Alternatively, each individual control unit may include a plurality of control units. Further, the vehicle control system 7000 may include another control unit not depicted in the figures. In addition, part or the whole of the functions performed by one of the control units in the above description may be assigned to another control unit. That is, predetermined arithmetic processing may be performed by any of the control units as long as information is transmitted and received via the communication network 7010. Similarly, a sensor or a device connected to one of the control units may be connected to another control unit, and a plurality of control units may mutually transmit and receive detection information via the communication network 7010.

In the vehicle control system thus configured, the imaging section 7410 and the outside-vehicle information detecting section 7420 acquire outside-vehicle information, while the general-purpose communication I/F 7620 and the dedicated communication I/F 7630 communicate with the traveling assistance management device and the leading vehicle. The microcomputer 7610 performs following traveling control for traveling while following the leading vehicle based on the outside-vehicle information, and on leading vehicle information acquired from the traveling assistance management device. The vehicle control system included in the traveling assistance target vehicle and the candidate vehicle may be configured not to have a part of the block depicted in FIG. 4, or to have a block not depicted in FIG. 4.

FIG. 6 is a block diagram depicting an example of schematic configuration of the traveling assistance management device. The traveling assistance management device 15 functions as transport infrastructure, and includes a master server 151, a local server (or cloud server) 152 connected to the master server 151 and provided for each management region, and one or a plurality of communication units 153 connected to the local server 152, for example.

The master server 151 unifies and manages information acquired by the local server 152 provided for each management region. For example, the master server 151 manages a traveling assistance target vehicle and candidate vehicles in each of the management regions. For example, information to be managed includes a departure place, a requested destination, a traveling schedule route, weather/environment information, accident or incident risk information, loading information, movement characteristic information regarding individual vehicle (e.g., braking distance difference produced by lived load of heavy vehicle, and information regarding allowable speed to traveling road radius), maximum traveling speed information for single and platooning vehicle group formation, vehicle latest update diagnosis information, and driver driving ability information for each vehicle demanding traveling assistance in a wide area.

The local server 152 communicates with the traveling assistance target vehicle and the candidate vehicles within the management region via the communication unit 153 to acquire traveling position, traveling condition, traveling environment information and the like. The local server 152 also analyzes acquired traveling environment information and the like, filters false information and the like, and adds risk information and the like as necessary to provide the information for a vehicle traveling later on a road for which the traveling environment information and the like have been already acquired so as to achieve safe traveling. The local server 152 further manages vehicles entering the management region and driver information in association with each other with tag information or the like attached to continue assistance between local servers even when the traveling assistance target vehicle shifts between the management regions in the traveling schedule route. For example, the traveling assistance management device 15 can perform steering control such as emergent deceleration, traveling start, and evacuation based on a sequence of the vehicle in a case of emergency during traveling of the traveling assistance target vehicle in any management region. In this case, the traveling assistance management device 15 may further guide and stop the traveling assistance target vehicle at an evacuation parking position.

The local server 152 provides short-range wireless high-speed communication in a region or section narrower than that of the master server 151. For example, the local server 152 acquires map information update of a detailed traveling route obtained by practical traveling from a traveling vehicle to effectively collect information for each region and perform a complex interpolation function of local dynamic map. Wireless communication between the local server 152 and a vehicle only requires short-distance communication with low power, wherefore individual and independent use of radio wave resources is allowed for each region. Accordingly, information necessary for interpolation of local dynamic map is collectable.

### <3. Operation of traveling assistance system>

According to the traveling assistance system 10, the traveling assistance target vehicle 11 performs traveling control in accordance with a vehicle traveling status for a traveling control effect parameter. Each of FIGS. 7 and 8 depicts an example of a relationship between following traveling control effect parameters and vehicle traveling statuses.

The traveling assistance target vehicle 11 implements automatic driving by receiving traveling environment information from the leading vehicle 12s. The distance between the traveling assistance target vehicle 11 and the leading vehicle 12s is set to an appropriate distance for implementing automatic driving.

When this distance between the vehicles is too long, a long time elapses from the time when the leading vehicle 12s acquires traveling environment information in a predetermined section until the time when the traveling assistance target vehicle 11 completes traveling in the predetermined section. In this case, the traveling environment in the predetermined section may change.

On the other hand, when the distance between the vehicles is too short, in a case where the leading vehicle 12s determines that automatic driving is not allowed in the predetermined section and transmits information indicating that automatic driving is not allowed in the predetermined section to the traveling assistance target vehicle 11, the traveling assistance target vehicle 11 may not have a sufficient time for switching from an automatic driving mode to a manual driving mode.

At least one of parameters depicted in FIGS. 7 and 8 is used to set the appropriate distance between the traveling assistance target vehicle 11 and the leading vehicle 12s.

When the cargo is a heavy load, for example, inertial force produced at the time of sudden braking or turning of a vehicle carrying cargo increases. In this case, the vehicle is difficult to immediately stop, or complete turning during entrance into a curve without speed reduction. Moreover, in a case of a tractor such as a trailer, a problem called tractor rock phenomenon (trailer rock phenomenon) may be caused during traveling at a curve. In this case, more careful traveling is required for the tractor than for an ordinary car. Accordingly, limitations such as a minimum distance between vehicles and speed limits at downslopes, curves and the like are imposed for safe traveling in view of a loading volume and a vehicle structure. Fuel consumption rate improves (air resistance decreases) as proximity increases with reduction of a distance between vehicles in platooning or the like. However, excessive proximity is not desirable, wherefore an appropriate distance between vehicles is calculated based on parameters.

The following traveling control effect parameters include presence or absence of a leading vehicle, driving ability index, latest LDM acquired section information, following distance reduction traveling safety designation section, following traveling safety distance coefficient, recognition rate decrease index, low accident rate safe road section, environment dependency risk factor, road surface friction coefficient, deceleration factor by prior acquisition of non-safe information, recommended traveling speed limitation in corresponding section, near unexpected phenomenon occurrence information, and determination of whether or not following traveling is allowed.

The presence or absence of a leading vehicle is a parameter which indicates whether or not a leading vehicle available for following traveling is present, for example. The driving ability index is a parameter which indicates driving ability of the driver, and is set to a low index value when the driver has low eyesight or hearing ability, for example. The latest LDM acquired section information is a parameter which indicates a section where information necessary for automatic driving has been acquired. The following distance reduction traveling safety designation section is a parameter which indicates a section where a distance between vehicles is reduced to allow efficient traveling during following traveling control, particularly during platooning. For example, a linear road is designated as a safety section, while a road including many curves, for example, is designated as a section at a lowered safety level. The following traveling safety distance coefficient is a coefficient usable for setting a safe distance between vehicles during following traveling, and set to a small value for a section including slippery road surfaces. The recognition rate decrease index is a coefficient relating to decrease in a recognition rate, and set to a small value in a case where the recognition rate decreases as a result of occlusion, dirt or the like. The low accident rate safe road section is a parameter which indicates an accident status in a section. For example, a section having a low accident rate is indicated as a safe road section. The environment dependency risk factor is a parameter relating to weather or the like. A low risk is set for weather suited for driving, such as fine weather. On the other hand, a middle risk is set for light rain, while a high risk is set for heavy rain, snowstorm or the like. The road surface friction coefficient is a coefficient set based on season, time, pavement condition and the like, and set to a small value for a situation allowing a long braking distance. The deceleration factor by prior acquisition of non-safe information is a parameter for performing deceleration traveling in a non-safe traveling section for which information indicating a non-safe traveling section has been acquired beforehand. This parameter value is set to a large value in a case where non-safe information is acquired beforehand. The recommended traveling speed limitation in corresponding section is a parameter which indicates an upper limit speed in the corresponding section. The near unexpected phenomenon occurrence information is a parameter which indicates occurrence of an unexpected phenomenon which may cause problems during traveling along a traveling schedule route. For example, the near unexpected phenomenon occurrence information indicates a case where visibility suddenly lowers by a near fire or the like in a section where automatic driving has been allowed at a start of traveling, and a case where a phenomenon causing problems during traveling occurs as a result of a fall of rock or the like. A parameter of the determination of whether or not following traveling is allowed indicates an update check result of information necessary for following traveling, for example.

The distance between the traveling assistance target vehicle 11 and the leading vehicle 12s, and a proximity distance between vehicles in platooning are set based on at least one value of the foregoing parameters. Thereafter, traveling control is performed using appropriate following distance information set in this manner.

Traveling control may be performed using only a part of the parameters depicted in FIGS. 7 and 8, or using parameters not depicted in the figures.

The traveling assistance system 10 performs traveling control in accordance with a vehicle traveling status for a traveling control effect parameter. For example, the traveling assistance target vehicle 11 performs traveling control in accordance with the driving ability index in a case where a leading vehicle is absent The traveling assistance target vehicle 11 performs assistance traveling control in a case where the driving ability index is low. In a case where a leading vehicle is present, the section is a safety section as indicated by the parameter of the following distance reduction traveling safety designation section, and the near unexpected phenomenon occurrence information is absent, following traveling control is performed with proximity between vehicles in a case of platooning.

Described hereinbelow is an operation of the traveling assistance system for performing traveling assistance based on the presence or absence of a leading vehicle, driving ability of the driver and the like. FIG. 9 is a sequence diagram depicting an operation of the traveling assistance system. Presented by way of example is a case where two candidate vehicles are present for simplifying the description. It is assumed that the candidate vehicle 12-1 performs a traveling action of a leading vehicle of the traveling assistance target vehicle 11 in a part up to a middle of a traveling schedule route of the traveling assistance target vehicle 11, and that the candidate vehicle 12-2 performs the remaining part of the traveling action of the leading vehicle of the traveling assistance target vehicle 11.

In step ST1, the candidate vehicle 12-1 transmits traveling schedule information. The candidate vehicle 12-1 transmits the traveling schedule information indicating traveling schedule route, traveling time and the like to the traveling assistance management device 15.

In step ST2, the candidate vehicle 12-2 transmits traveling schedule information. The candidate vehicle 12-2 transmits the traveling schedule information indicating traveling schedule route, traveling time and the like to the traveling assistance management device 15.

In step ST3, the traveling assistance target vehicle 11 requests leading vehicle information. The traveling assistance target vehicle 11 requests, by using the assistance request function, the traveling assistance management device 15 to issue leading vehicle information relating to a candidate vehicle which performs the traveling action of the leading vehicle.

In step ST4, the traveling assistance management device 15 selects the leading vehicle. The traveling assistance management device 15 selects the candidate vehicle which has a traveling schedule route identical to the route of the traveling assistance target vehicle 11, and a traveling time falling within a predetermined time range for the traveling time of the traveling assistance target vehicle 11, such as the candidate vehicle 12-1, in response to the request for leading vehicle information from the traveling assistance target vehicle 11. Moreover the traveling assistance management device 15 notifies the selected candidate vehicle 12-1 of leading vehicle target information indicating selection as the leading vehicle 12s. The leading vehicle target information may include not only information indicating selection as the leading vehicle, but also following vehicle information indicating the traveling assistance target vehicle 11 performing following traveling, control information for communication with the traveling assistance target vehicle 11, and others. For example, the leading vehicle target information is information indicating that the leading vehicle is a heavy load vehicle having considerably different characteristics from characteristics of an ordinary vehicle on downslopes or upslopes. In addition, the leading vehicle target information may be representative information in a platooning group. Traveling considerations matched with characteristics of the leading vehicle can be given based on the leading vehicle target information.

In step ST5, the candidate vehicle 12-1 performs a leading vehicle selection response process. The candidate vehicle 12-1 generates acceptance notification indicating that traveling as a leading vehicle of the traveling assistance management device 15 has been accepted in response to the notification of the leading vehicle target information received from the traveling assistance management device 15, and notifies the traveling assistance management device 15 of the acceptance notification. In a case where traveling as a leading vehicle is not accepted, the candidate vehicle 12-1 generates non-acceptance notification, and notifies the traveling assistance management device 15 of the non-acceptance notification.

In step ST6, the traveling assistance management device 15 responds to the request for the leading vehicle information. In a case where the traveling assistance management device 15 has received the acceptance notification from the candidate vehicle 12-1 selected in step ST4, the traveling assistance management device 15 generates leading vehicle information indicating that the leading vehicle 12s is the candidate vehicle 12-1, and outputs the generated information to the traveling assistance target vehicle 11. The leading vehicle target information includes vehicle information regarding the candidate vehicle selected as a leading vehicle, control information for communication with the leading vehicle 12s, tag information for managing the traveling assistance management device 15, and others. In a case where no leading vehicle is present, information indicating that no leading vehicle is present is output as the leading vehicle information.

In step ST7, the traveling assistance target vehicle 11 starts following traveling. The traveling assistance target vehicle 11 detects the leading vehicle 12s (corresponding to candidate vehicle 12-1) based on the leading vehicle information, switches traveling control from traveling control with no leading vehicle, such as autonomous traveling control, to following traveling control following the leading vehicle, and performs automatic driving following the detected leading vehicle 12s.

The following traveling control performs following traveling communication between vehicles, and transmits, to the traveling assistance target vehicle 11, traveling environment information indicating a traveling environment detected by the leading vehicle 12s, for example, to allow safe traveling by the traveling assistance target vehicle 11 even during traveling following the leading vehicle 12s. For example, even when the leading vehicle 12s performs a sudden avoidance action based on detection of a falling object, the traveling assistance target vehicle 11 performs an avoidance action similarly to the leading vehicle 12s based on the traveling environment information received from the leading vehicle 12s. In addition, in a case where the leading vehicle 12s suddenly needs to change the traveling route, for example, the traveling assistance target vehicle 11 may be notified of an end of following traveling by following traveling communication between vehicles.

More specifically, the concept of following traveling according to the present invention is considerably different from a mechanism of a conventional auto-cruise control in that risk information allowed to be provided by LDM is provided to a passing section via prior communication between vehicles by acquiring prior road safety, road boundary line marker or other identifications from a vehicle traveling sufficiently ahead of the own vehicle while securing a conventional or longer distance from the vehicle traveling immediately before by using autonomous sensing. Moreover, the traveling assistance target vehicle 11 is not required to have movement characteristics equivalent to the characteristics of the leading vehicle 12s in view of characteristics of vehicles. In this case, the traveling assistance target vehicle 11 which is a heavy load vehicle, for example, may lower the speed on upslopes or the like and increase the distance from the leading vehicle 12s. Accordingly, a chief purpose of use is not to follow the leading vehicle 12s directly by millimeter waves or the like, but to acquire prior information regarding the traveling environment from the leading vehicle 12s. Furthermore, as described in steps below, relay-type prior transfers are repeatedly carried out to perform traveling continuous assistance for a long distance when a leading vehicle is absent. Even in a case where the relay is discontinued by an inevitable phenomenon during traveling, the traveling assistance target vehicle 11 is notified of this discontinuation beforehand to secure safety.

In step ST8, the traveling assistance target vehicle 11 gives notification of following traveling information. The traveling assistance target vehicle 11 generates following traveling information indicating a history of following traveling, and outputs the generated information to the traveling assistance management device 15. For example, the following traveling information includes information such as traveling route of following traveling, following traveling distance, following traveling start time, following traveling end time and the like to manage the traveling history of the leading vehicle by the traveling assistance management device 15. Notification of the following traveling information may be given at an appropriate time during following traveling, or at an end of following traveling.

In step ST9, the traveling assistance target vehicle 11 ends following traveling. The traveling assistance target vehicle 11 ends following traveling in a case where the traveling schedule route of the leading vehicle 12s is different from the traveling schedule route of the traveling assistance target vehicle 11, or in a case where an end of following traveling is requested by at least either the traveling assistance target vehicle 11 or the leading vehicle 12s, such as a case in which an end of following traveling is requested based on a necessity for sudden change of the traveling route of the leading vehicle 12s. The traveling assistance target vehicle 11 having ended following traveling also switches control to traveling control not using a leading vehicle.

In step ST10, the traveling assistance target vehicle 11 requests leading vehicle information. The traveling assistance target vehicle 11 requests, by using the assistance request function, the traveling assistance management device 15 to issue leading vehicle information relating to the candidate vehicle which performs the traveling action of the leading vehicle.

In step ST11, the traveling assistance management device 15 selects a leading vehicle. The traveling assistance management device 15 selects a candidate vehicle which has a traveling schedule route identical to the route of the traveling assistance target vehicle 11, and a traveling time falling within a predetermined time range for the traveling time of the traveling assistance target vehicle 11, such as the candidate vehicle 12-2, in response to the request for leading vehicle information from the traveling assistance target vehicle 11. The traveling assistance management device 15 also notifies the selected candidate vehicle 12-2 of leading vehicle target information indicating selection as the leading vehicle 12s.

In step ST12, the candidate vehicle 12-2 performs a leading vehicle selection response process. The candidate vehicle 12-2 generates acceptance notification indicating that traveling as a leading vehicle of the traveling assistance management device 15 has been accepted in response to the notification of the leading vehicle target information received from the traveling assistance management device 15, and notifies the traveling assistance management device 15 of the acceptance notification. In a case where traveling as a leading vehicle is not accepted, the candidate vehicle 12-2 generates non-acceptance notification, and notifies the traveling assistance management device 15 of the non-acceptance notification.

In step ST13, the traveling assistance management device 15 responds to the request for the leading vehicle information. In a case where the traveling assistance management device 15 has received the acceptance notification from the candidate vehicle 12-2 selected in step ST11, the traveling assistance management device 15 generates leading vehicle information indicating that the leading vehicle 12s is the candidate vehicle 12-2, and outputs the generated information to the traveling assistance target vehicle 11. The leading vehicle target information includes vehicle information regarding the candidate vehicle selected as a leading vehicle, control information for communication with the leading vehicle 12s, tag information for managing the traveling assistance management device 15, and others. In a case where no leading vehicle is present, information indicating that no leading vehicle is present is output as the leading vehicle information.

In step ST14, the traveling assistance target vehicle 11 starts following traveling. The traveling assistance target vehicle 11 detects the leading vehicle 12s (corresponding to candidate vehicle 12-2) based on the leading vehicle information, switches traveling control from traveling control with no leading vehicle to following traveling control following the leading vehicle and performs automatic driving following the detected leading vehicle 12s.

The following traveling control performs following traveling communication between vehicles, and transmits, to the traveling assistance target vehicle 11, traveling environment information indicating a traveling environment detected by the leading vehicle 12s, for example, to allow safe traveling by the traveling assistance target vehicle 11 even during traveling following the leading vehicle 12s. In a case where the leading vehicle 12s suddenly needs to change the traveling route, the traveling assistance target vehicle 11 may be notified of an end of following traveling by following traveling communication between vehicles.

In step ST15, the traveling assistance target vehicle 11 gives notification of following traveling information. The traveling assistance target vehicle 11 generates following traveling information indicating a history of following traveling, and outputs the generated information to the traveling assistance management device 15.

In step ST16, the traveling assistance target vehicle 11 ends following traveling. The traveling assistance target vehicle 11 ends following traveling in a case where the traveling schedule route of the leading vehicle 12s is different from the traveling schedule route of the traveling assistance target vehicle 11, or in a case where an end of following traveling is requested by at least either the traveling assistance target vehicle 11 or the leading vehicle 12s. The traveling assistance target vehicle 11 having ended following traveling also switches control to traveling control not using a leading vehicle.

In step ST17, the traveling assistance target vehicle 11 requests leading vehicle information. The traveling assistance target vehicle 11 requests, by using the assistance request function, the traveling assistance management device 15 to issue leading vehicle information relating to the candidate vehicle which performs the traveling action of the leading vehicle.

In step ST18, the traveling assistance management device 15 responds to the request for the leading vehicle information. The traveling assistance management device 15 generates leading vehicle information indicating that no leading vehicle is present, and outputs the generated information to the traveling assistance target vehicle 11

In step ST19, the traveling assistance target vehicle 11 requests remote driving assistance. The traveling assistance target vehicle 11 requests the traveling assistance management device 15 to provide remote driving assistance in a case where the traveling position lies in an assistance section.

In step ST20, the traveling assistance management device 15 executes remote driving assistance. The traveling assistance management device 15 determines necessary assistance based on driver information supplied from the traveling assistance target vehicle 11, generates driving assistance information in accordance with driving ability or the like of the driver of the traveling assistance target vehicle 11, and outputs the generated information to the traveling assistance target vehicle 11. For example, recognition and determination of a far object is most affected by bad eyesight of the driver. In this case, the traveling assistance management device 15 generates driving viewpoint information for assisting recognition and determination of an object in a peripheral environment affecting driving for compensation for the eyesight of the driver to achieve driving equivalent to driving by a driver having ordinary eyesight. In addition, when time delay in responding to risk determination is produced, the traveling assistance management device 15 generates driving assistance information for performing an early avoidance action to secure safety. The traveling assistance management device 15 generates, as driving assistance information, assistance information for issuing an early warning by voices, displays or the like about an obstacle, a road sign or the like in accordance with characteristics of peculiar vision of the driver, and assistance information for increasing the distance between the vehicles, shifting a braking start point of the brake to an earlier point, guiding early for a left or right turn at road change, and others.

The examples described above are examples for assisting the driver having low eyesight. A use case considered to produce the most remarkable advantage by remote assistance performed at a remote place is such a case where the driver requiring long-time care in a region not equipped with sufficient traffic means has a bad physical condition and goes to hospital by using the automatic driving function. In this case, a mode considered to be available is such a mode which achieves traveling by receiving remote assistance, for example, in such a situation that automatic traveling is difficult to continue in a traveling route after a start of shift by automatic driving. These cases are caused not frequently in a wide area rather than constantly, wherefore assistance may be provided on the master side performing overall control in a wide area. Moreover, it is effective that a manager individually and directly performs temporary remote control of the vehicle for the purpose of response to a phenomenon caused in a non-defined abnormal condition not expected. The individual response control need not be constantly performed. For example, an autonomous response extension period can be elongated by issuing a decelerated safe traveling instruction for allowing semi-autonomous traveling of the vehicle beforehand for low-speed traveling such that low-speed traveling is achievable during autonomous traveling before direct remote assistance. Particularly in a road environment where deceleration or stop of a vehicle does not cause considerable disturbance for the road environment, such as an ordinary road, the frequency of remote assistance can be reduced. Effective means is achievable when a communication network is well equipped.

In step ST21, the traveling assistance target vehicle 11 gives notification of an end of remote driving assistance. The traveling assistance target vehicle 11 notifies the traveling assistance management device 15 of the end of remote driving assistance in a case where the traveling position passes through the assistance section. The traveling assistance target vehicle 11 also switches control to traveling control not using the leading vehicle and remote driving assistance.

An operation of the traveling assistance target vehicle is now described with reference to a flowchart. FIG. 10 is a flowchart depicting an example of the operation of the traveling assistance target vehicle. In step ST31, the integrated control unit 7600 acquires driver information. The integrated control unit 7600 acquires the driver information from the in-vehicle information detecting unit 7500 and the input section 7800. The driver information includes information for determining assistance necessary for the driver, such as information relating to daytime eyesight, far eyesight, hearing ability, viewing angle, and other information relating to recognition ability of a peripheral environment. Moreover, the driver information may include information such as age, gender and the like of the driver. The driver information peculiar to the driver is obtained by constant and repeated learning of peculiar characteristics of the driver for each traveling after personal authentication of the driver. The driver information peculiar to the driver is recorded in a driver card or the like or a remote server, for example. The input section 7800 of the integrated control unit 7600 reads information from the driver card or the like to acquire driver information. Moreover, for example, the integrated control unit 7600 may use, as information for determining assistance necessary for the driver, steering wheel operation ability and brake pedal operation ability detected by the vehicle state detecting section 7110, and a detection result of degree of fatigue, degree of concentration or the like of the driver detected by the in-vehicle information detecting unit 7500. After the integrated control unit 7600 acquires the driver information, the process proceeds to step ST32.

In step ST32, the integrated control unit 7600 sets a destination. After the integrated control unit 7600 sets the destination based on user operation input to the input section 7800, the process proceeds to step ST33.

In step ST33, the integrated control unit 7600 acquires map information. In a case where the storage section 7690 stores the map information, for example, the integrated control unit 7600 acquires map information including the current place and the destination from the storage section 7690. Moreover, in a case where the traveling assistance management device 15 provides map information, map information including the current place and the destination is acquired from the traveling assistance management device 15 via the general-purpose communication IF 7620 and the dedicated communication IF 7630. Thereafter, the process proceeds to step ST34.

In step ST34, the integrated control unit 7600 sets a traveling schedule route. The integrated control unit 7600 sets a traveling schedule route from the current place to the destination based on the driver information acquired in step ST31. For example, the integrated control unit 7600 sets the traveling schedule route in accordance with an environment recognition ability and a driving operation ability indicated by the driver information. Setting of the traveling schedule route may include not only the route from the current place to the destination, but also the assistance section or the like for which remote driving assistance is provided from the traveling assistance management device 15 in accordance with necessary attentiveness or the like at the traveling position for the front or peripheral environment based on the driver information or map information. After the integrated control unit 7600 sets the traveling schedule route, the process proceeds to step ST35.

In step ST35, the integrated control unit 7600 starts acquisition of driving related information. The integrated control unit 7600 acquires traveling environment information, monitors a driver state, and acquire the current position to acquire the driving related information. For example, the integrated control unit 7600 acquires traveling environment information related to weather, obstacle, pedestrian or the like from the outside-vehicle information detecting unit 7400 to acquire the traveling environment information. Moreover, for example, the integrated control unit 7600 communicates with the leading vehicle 12s or the traveling assistance management device 15 using the general-purpose communication I/F 7620, the dedicated communication I/F 7630 to acquire the traveling environment information. For example, the integrated control unit 7600 acquire a detection result such as degree of fatigue, degree of concentration of the driver, doze of the driver or the like from the in-vehicle information detecting unit 7500 to monitor the driver state. Furthermore, the integrated control unit 7600 accurately acquires an absolute position of the vehicle based on positional information generated by the positioning section 7640, positional information received by the beacon receiving section 7650, and information indicating an angular velocity of axial rotational movement of the vehicle body, acceleration of the vehicle or the like acquired from the driving system control unit 7100 to acquire the current position. After the integrated control unit 7600 starts acquisition of the driving related information in this manner, the process proceeds to step ST36.

In step ST36, the integrated control unit 7600 requests traveling assistance. The integrated control unit 7600 outputs a request for traveling assistance to the traveling assistance management device 15. In a case where proceeding vehicle information is requested as the request for traveling assistance, this information includes driver information and information regarding the set traveling schedule route, traveling time and the like, for example. The traveling assistance management device 15 selects a vehicle performing a traveling action of a leading vehicle from candidate vehicles registered beforehand based on the driver information and the information such as the traveling schedule route, generates leading vehicle information indicating the selected vehicle, and outputs the generated information to the integrated control unit 7600. In a case where no vehicle performing the traveling action of the leading vehicle is selected, the traveling assistance management device 15 generates leading vehicle information indicating absence of the leading vehicle. Moreover, the integrated control unit 7600 requests remote driving assistance as the request for traveling assistance in a case where the traveling position lies in the assistance section in the absence of the leading vehicle. In this case, the traveling assistance management device 15 generates driving assistance information for performing optimum traveling assistance in the assistance section based on the driver information and the traveling schedule route, and outputs the generated information to the integrated control unit 7600. After the integrated control unit 7600 requests the traveling assistance management device 15 to perform traveling assistance and acquires the leading vehicle information or the driving assistance information, the process proceeds to step ST37.

In step ST37, the integrated control unit 7600 determines whether or not the current traveling is ordinary road traveling. In a case where the integrated control unit 7600 determines that the traveling road is an ordinary road based on map information and the current position of the vehicle, the process proceeds to step ST38. In a case where the integrated control unit 7600 determines that the traveling road is not an ordinary road (e.g., determines that the traveling road is an automatic driving dedicated road), the process proceeds to step ST47. The ordinary road herein refers to a road section requiring steering of the vehicle by the driver, while the road which is not the ordinary road refers to a road or traveling lane allowing automatic driving and having local dynamic map constantly and securely updated as a traveling section where full-automatic traveling is allowed.

In step ST38, the integrated control unit 7600 determines whether or not the driving ability is sufficient. The integrated control unit 7600 determines that the driving ability is sufficient in a case where a monitoring result of the driver state indicates the degree of fatigue of the driver smaller than a fatigue degree determination threshold set beforehand, and the degree of concentration larger than a concentration degree determination threshold set beforehand. Thereafter, the process proceeds to step ST39. On the other hand, the integrated control unit 7600 determines that the driving ability is insufficient in a case where the monitoring result of the driver state indicates the degree of fatigue of the driver equal to or larger than the fatigue degree determination threshold, and the degree of concentration equal to or smaller than the concentration degree determination threshold. Thereafter, the process proceeds to step ST40.

In step ST39, the integrated control unit 7600 sets manual traveling control. The integrated control unit 7600 sets the traveling control of the vehicle to the manual traveling control in accordance with manual steering by the driver. Thereafter, the process proceeds to step ST48.

In step ST40, the integrated control unit 7600 determines whether or not a leading vehicle is present. In a case where the integrated control unit 7600 determines that the acquired leading vehicle information indicates presence of a leading vehicle, the process proceeds to step ST41. In a case where the integrated control unit 7600 determines that the leading vehicle information indicates absence of a leading vehicle, the process proceeds to step ST42.

In step ST41, the integrated control unit 7600 sets following traveling control. The integrated control unit 7600 sets the traveling control to following traveling control for following the leading vehicle indicated by the leading vehicle information. The integrated control unit 7600 communicates with surrounding vehicles by communication between vehicles, for example, and detects the leading vehicle and starts following traveling based on positional information and the like acquired from the leading vehicle when communication with the leading vehicle indicated by the leading vehicle information is achieved. Moreover, the integrated control unit 7600 performs traveling control for continuing following traveling based on communication with the leading vehicle by communication between vehicles, captured images or the like output from the imaging section 7410, and information from the outside-vehicle information detecting section 7420 and the like. In the following traveling control herein, the distance between vehicles needs to be reduced to minimize resistance of wind during traveling. Traveling with low fuel consumption is also achievable by reduction of the distance between vehicles. However, during following traveling with a reduced distance between vehicles, a safe distance between vehicles needs to be secured at the time of acceleration and deceleration or emergency. Accordingly, the integrated control unit 7600 acquires traveling environment information indicating a road status and the like from a leading vehicle traveling one step ahead or the like, and adjusts a distance between vehicles in a motorcade including the traveling assistance target vehicle and constituted of following vehicles based on the acquired traveling environment information to achieve safe following traveling. The distance between vehicles in the following traveling control may be changed from a distance between vehicles where priority is given to fuel consumption, to a distance between vehicles where priority is given to safety in accordance with the traveling environment and traveling section based on the information from the traveling assistance management device 15. After the integrated control unit 7600 performs the following traveling control, the process proceeds to step ST48. The driving assistance target vehicle may be a single vehicle. Safety of the front road is secured with high reliability based on prior information when a leading person is present. Accordingly, a person requiring assistance such as a sick person can shift by using the driving assistance target vehicle.

In step ST42, the integrated control unit 7600 determines whether or not the current section is an assistance section. The integrated control unit 7600 proceeds to step ST43 in a case where the traveling position lies in the assistance section. The integrated control unit 7600 proceeds to step ST46 in a case where the traveling position lies out of the assistance section.

In step ST43, the integrated control unit 7600 determines whether or not remote driving assistance is provided. The process proceeds to step ST44 in a case where the integrated control unit 7600 can acquire remote driving assistance information from the traveling assistance management device 15. The process proceeds to step ST45 in a case where the integrated control unit 7600 cannot acquire remote driving assistance information.

In step ST44, the integrated control unit 7600 sets assistance traveling control. The integrated control unit 7600 sets the traveling control to assistance traveling control which performs traveling control under surveillance by the traveling assistance management device 15. The integrated control unit 7600 communicates with the traveling assistance management device 15 to acquire remote driving assistance information from the traveling assistance management device 15. For example, the integrated control unit 7600 outputs, to the traveling assistance management device 15, various information necessary for the traveling control (e.g., current position of vehicle, traveling environment information, and captured peripheral images acquired by vehicle). The traveling assistance management device 15 generates remote driving assistance information based on the driver information and various information acquired from the integrated control unit 7600, and outputs the generated information to the integrated control unit 7600. The integrated control unit 7600 controls assistance such as warning using the audio speaker 7710 and the display section 7720, and operations of the driving system control unit 7100 and the body system control unit 720 based on the remote driving assistance information acquired from the traveling assistance management device 15 to provide assistance. Thereafter, the process proceeds to step ST48. In a case where immediate response determination is difficult during deceleration traveling in a state that steering is difficult in a long-term care requiring condition of the driving assistance target vehicle, the vehicle may be temporarily stopped, for example, to require additional remote assistance control.

In step ST45, the integrated control unit 7600 sets non-surveillance traveling control. The integrated control unit 7600 unable to acquire remote driving assistance information from the traveling assistance management device 15 sets non-surveillance traveling control which performs low-speed traveling control by control in a range achievable by a function of the ADAS, for example. Thereafter, the process proceeds to step ST48. However, remote assistance is difficult to receive in this case, wherefore the vehicle needs to be stopped unless the assumed driver performs steering. In a case where the leading vehicle passes through a stop position to come into a state allowing following traveling, the traveling plan is allowed to advance.

In step ST46 after step ST42, the integrated control unit 7600 sets autonomous traveling control. The integrated control unit 7600 sets autonomous traveling control for autonomously performing automatic driving without traveling control. The integrated control unit 7600 autonomously performs automatic driving based on a detection result obtained by the vehicle state detecting section 7110, the imaging section 7410, the outside-vehicle information detecting section 7420 or the like, for example. The autonomous traveling control also performs operation such as deceleration and slow movement, or evacuation stop or the like in emergency. After the integrated control unit 7600 performs the autonomous traveling control, the process proceeds to step ST48.

After determining that the current traveling is not ordinary road traveling in step ST37, the process proceeds to step ST47. In this case, the integrated control unit 7600 sets full-automatic traveling control. The integrated control unit 7600 traveling on an automatic driving road or the like sets traveling control to full-automatic traveling control, and performs traveling control of the full-automatic driving based on a detection result from the vehicle state detecting section 7110, the imaging section 7410, the outside-vehicle information detecting section 7420 or the like as described above. Thereafter, the process proceeds to step ST48. In a case where local dynamic map is constantly updated for a dedicated road allowing automatic driving, the vehicle is allowed to perform automatic and safe traveling regardless of the presence or absence of a leading vehicle. While sectioning is not depicted in the present flowchart, a latest status of the road can be acquired from a leading vehicle traveling one step ahead. Accordingly, traveling of safe platooning with a reduced distance between vehicles is achievable.

In step ST48, the integrated control unit 7600 determines whether or not an event requiring a review of traveling conditions for the traveling route has been detected during traveling under respective conditions. The integrated control unit 7600 detects an event requiring a review of the traveling conditions, such as an event requiring reset of the traveling control concerning the leading vehicle, traveling environment, driving status and the like. The integrated control unit 7600 detects conditions of the leading vehicle such as deviation of the leading vehicle from the traveling schedule route, end notification of the function as the leaving vehicle, and an accident caused on the scheduled traveling road based on communication via the dedicated communication I/F 7630, images captured by the imaging section 7410 or the like. The integrated control unit 7600 detects a large change of the traveling environment concerning the weather or road status (e.g., fall of rain or snow, road surface in snow or frozen state, and increase in the number of traveling vehicles) based on a detection result of the outside-vehicle information detecting section 7420 or the like. The integrated control unit 7600 detects considerable lowering of the driving ability concerning the driving status (e.g., doze or unconsciousness of driver) based on a detection result of the driver state detecting section 7510. In a case where the integrated control unit 7600 detects an event requiring reset of the traveling control, the process returns to step ST36. When the integrated control unit 7600 detects no event, the process proceeds to step ST49.

In step ST49, the integrated control unit 7600 determines whether or not the current time is a traveling end. The integrated control unit 7600 determines a traveling end and ends the traveling control at the time of an arrival at the destination set in step ST32, or execution of a traveling end operation. The integrated control unit 7600 also generates leading vehicle use information indicating a use status of the leading vehicle used in the following traveling control, and outputs the generated information to the traveling assistance management device 15. The integrated control unit 7600 repeats a loop for returning to step ST48 in a case where the integrated control unit 7600 determines that the current time is not a traveling end, and returns to step ST36 for reset every time an event causing a traveling condition change occurs during the loop to continue the traveling control. Accordingly, various traveling conditions can be seamlessly reviewed in accordance with road conditions and driver state caused with progress in traveling from step ST35 to step ST49 to continue traveling in accordance with traveling conditions.

An operation example of a traveling assistance operation is now described with reference to FIGS. 11 and 12. FIG. 11 is a diagram explaining the traveling assistance operation, presenting on a map an example of a case where the traveling assistance target vehicle 11 travels on an ordinary road from a position P1 to a position P11. FIG. 12 depicts an example of a relationship between an elapsed time and a traveling distance (distance from position P1) in the traveling assistance operation. It is assumed in FIG. 12 that each speed between positions is constant for easy understanding of the description. In the respective figures, a double line indicates following traveling control, a solid line indicates autonomous traveling control, and a broken line indicates a section of the assistance traveling control.

The traveling assistance target vehicle 11 requests the traveling assistance management device 15 to provide remote traveling assistance, and acquires assistance identification information and leading vehicle information to start traveling from the position P1 to the position P11. In the leading vehicle information herein, the candidate vehicle 12-1 is the leading vehicle 12s from the position P2 to the position P3, the candidate vehicle 12-2 is the leading vehicle 12s from the position P4 to the position P5, the candidate vehicle 12-3 is the leading vehicle 12s from the position P8 to the position P9, and the candidate vehicle 12-4 is the leading vehicle 12s from the position P8 to the position P10. In the assistance identification information, the section from the position P6 to the position P7 is a section where autonomous traveling is not desirable (e.g., section having high accident rate), for example, as a section requiring driving assistance. The traveling assistance management device 15 may indicate, by leading vehicle information, not only information regarding a leading vehicle traveling to the destination, but also information regarding a leading vehicle traveling from a traveling start to an intermediate position, and then output latest leading vehicle information to the traveling assistance target vehicle in accordance with a shift of the traveling assistance target vehicle. Moreover, the traveling assistance management device 15 may notify the traveling assistance target vehicle not only of leading vehicle information indicating one candidate vehicle as a leading vehicle, but also of leading vehicle information indicating a plurality of candidate vehicles as leading vehicles. Moreover, the traveling assistance management device 15 may output latest assistance identification information to the traveling assistance target vehicle in accordance with a shift of the traveling assistance target vehicle.

The traveling assistance target vehicle 11 performs automatic driving by setting traveling control to autonomous traveling control, for example, until the position P2 based on the leading vehicle information indicating the leading vehicle 12s from the position P2.

When the traveling assistance target vehicle 11 detects the candidate vehicle 12-1 traveling in the traveling schedule route of the traveling assistance target vehicle 11 at the position P2 and indicated by the leading vehicle information received from the traveling assistance management device 15, the traveling assistance target vehicle 11 switches traveling control to following traveling control designating the candidate vehicle 12-1 as the leading vehicle 12s to perform automatic driving.

When detecting deviation of the leading vehicle 12s (candidate vehicle 12-1) from the traveling schedule route at the position P3, the traveling assistance target vehicle 11 switches traveling control to autonomous traveling control to perform automatic driving.

When the traveling assistance target vehicle 11 detects the candidate vehicle 12-2 traveling in the traveling schedule route of the traveling assistance target vehicle 11 at the position P4 and indicated by the leading vehicle information received from the traveling assistance management device 15, the traveling assistance target vehicle 11 switches traveling control to following traveling control designating the candidate vehicle 12-2 as the leading vehicle 12s to perform automatic driving.

When detecting deviation of the leading vehicle 12s (candidate vehicle 12-2) from the traveling schedule route at the position P5, the traveling assistance target vehicle 11 switches traveling control to autonomous traveling control to perform automatic driving.

In a case where the assistance identification information indicates execution of assistance by the traveling assistance management device 15 in a section from the position P6 to the position P7 which is an assistance section, the traveling assistance target vehicle 11 switches traveling control to assistance traveling control to perform automatic driving. For example, recognition and determination of a far object is most affected by bad eyesight of the driver. In this case, the eyesight of the driver is compensated to assist recognition and determination of an object in a peripheral environment affecting driving, and achieve driving equivalent to driving by a driver having ordinary eyesight. In addition, when a time delay in responding to risk determination is produced, an early avoidance action is performed to secure safety. Accordingly, the assistance traveling control issues an early warning by voices, displays or the like about an obstacle, a road sign or the like in accordance with characteristics of peculiar vision of the driver, increases the distance between the vehicles, shifts a braking start point of the brake to an earlier point, and guides early for a left or right turn at road change, for example.

When passing through the section from the position P6 to the position P7 and detecting an event indicating that the traveling assistance target vehicle 11 has passed through the assistance section, the traveling assistance target vehicle 11 switches traveling control to autonomous traveling control to perform automatic driving. Particularly, the traveling assistance management device 15 decelerates traveling of the traveling assistance target vehicle 11 as a vehicle passing through a section not fully equipped with local dynamic map or insufficiently updated even with local dynamic map equipped. In this case, the traveling assistance management device 15 directly provides assistance at a place where autonomous traveling determination control is estimated to be difficult. In this manner, the traveling assistance target vehicle 11 is allowed to continue traveling toward the destination.

For example, the position P8 is a position of a rest area. In a case where the leading vehicle information received from the traveling assistance management device 15 indicates that the candidate vehicles 12-3 and 12-4 are leading vehicles, the traveling assistance target vehicle 11 detects either the candidate vehicle 12-3 or the candidate vehicle 12-4, and switches traveling control to following traveling control which designates the detected candidate vehicle (e.g., candidate vehicle 12-3) as the leading vehicle 12s to perform automatic driving.

When detecting deviation of the leading vehicle 12s (candidate vehicle 12-3) from the traveling schedule route at the position P9, the traveling assistance target vehicle 11 detects the candidate vehicle 12-4, and continues following traveling control which designates the detected candidate vehicle 12-4 as the leading vehicle 12s to perform automatic driving.

When deviation of the leading vehicle 12s (candidate vehicle 12-4) from the traveling schedule route is detected at the position P10, the traveling assistance target vehicle 11 switches traveling control to autonomous traveling control to perform automatic driving to the position P11.

The traveling assistance target vehicle 11 further notifies the traveling assistance management device 15 of following traveling performance. For example, tracking traveling performance indicates following traveling which designates the candidate vehicle 12-1 as the leading vehicle from the position P2 to the position P3, following traveling which designates the candidate vehicle 12-2 as the leading vehicle from the position P4 to the position P5, following traveling which designates the candidate vehicle 12-3 as the leading vehicle from the position P8 to the position P9, and following traveling which designates the candidate vehicle 12-4 as the leading vehicle from the position P9 to the position P10. Accordingly, the traveling assistance management device 15 is allowed to give an incentive to each candidate vehicle in accordance with traveling performance as a leading vehicle, and manage the incentive. Moreover, reduction or exemption of tax and toll, and aid of fuel cost are made in accordance with the managed incentive, wherefore the traveling assistance system of the present technology can be easily introduced.

These actions can give an incentive to each leading vehicle, allowing a large number of vehicles to be registered as leading vehicles in regions or traveling sections. In this case, a leading vehicle is automatically selected in accordance with the traveling schedule route and traveling time of the traveling assistance target vehicle 11 to perform following traveling for following the selected leading vehicle 12s. Accordingly, a safe shift is achievable.

Moreover, when receiving traveling environment information acquired by the leading vehicle 12s during following traveling, the traveling assistance target vehicle 11 performs traveling control by using the new traveling environment information supplied from the leading vehicle 12s. Accordingly, a safe shift is achievable based on the traveling environment information which is a little earlier information regarding the leading vehicle 12s already passed the environment even in a case where the traveling environment changes with an elapse of time. Furthermore, safe automatic driving is achievable by receiving remote driving assistance from the outside in accordance with the degree of risk in the traveling schedule route. In addition, a following vehicle is allowed to approach a vehicle capable of using new traveling environment information and achieving safe traveling, and safely perform following traveling for following the vehicle. Accordingly, a use amount of fuel and a generation amount of carbon dioxide decrease, wherefore formation of platooning is achievable. However, vehicle movement characteristics of ordinary cars and heavy load vehicles considerably differ from each other. Accordingly, strict management control is required for heavy load vehicles.

Furthermore, traveling assistance is performed in accordance with driving ability and the like. Accordingly, a vehicle or a traveling assistance system achieving a safe shift can be provided even in a state that an environment of fully automatic driving is not equipped. For example, there is a region in a condition considerably in short of public transportation and adversely affecting daily life. In this case, a driver who has bad eyesight and driving ability and performs steering of an ordinary vehicle with restrictions does not adversely affect users of other roads from social viewpoints when driving of the driver is only allowed under a limited condition that safe driving is secured by assistance for the driver in an advanced driving system. Accordingly, public welfare is achievable while considering the weak of society. Moreover, in a case where temporary lowering of eyesight may be caused temporarily or by stress imposed on a driver who even has sufficient eyesight for a driver's license, for example, means such as a substitute driver or the like is needed. However, means such as a substitute driver is not easily available in regions other than urban areas. Moreover, the leading vehicle 12s and the traveling assistance target vehicle 11 mutually use information while complementing local dynamic map, and appropriately acquire road environment information along the traveling route. Accordingly, local dynamic map can be updated via the communication unit 153 and the like. In this case, assistance traveling is achievable by following traveling using a leading vehicle or receiving assistance from the outside in the present technology even when driving ability lowers. Accordingly, safe and highly convenient traveling assistance system can be provided in any region. Moreover, such a synergistic effect is produced which updates local dynamic map with increase in the volume of passing vehicles under traveling assistance. Accordingly, a promoting effect of a wide use of automatic driving is secondarily produced. Presented herein by way of example is a case where a specific assistance mode is uniquely determined. However, in practical operation, the degree of convenience may be raised by guiding a leading vehicle while providing assistance, for example.

A series of processes described in the description can be executed by hardware, software, or complex configuration of both. In a case where the processes are executed by software, a program where a processing sequence is recorded is installed into a memory in a computer incorporated in dedicated hardware, and executed by the computer. Alternatively, the program may be installed in a general-purpose computer capable of executing various types of processes, and executed by the computer.

For example, the program may be recorded beforehand in a hard disk, an SSD (Solid State Drive), or a ROM (Read Only Memory) as a recording medium. Alternatively, the program may be stored (recorded) temporarily or permanently in a removable recording medium, such as a flexible disc, a CD-ROM (Compact Disc Read Only Memory), an MO (Magneto Optical) disc, a DVD (Digital Versatile Disc), a BD (Blu-Ray disc (registered trademark)), a magnetic disc, and a semiconductor memory card. The removable recording medium of these types can be provided as what is called package software.

Instead, the program may be transferred wirelessly or by wire to a computer from a download site via a network such as a LAN (Local Area Network) and the Internet, rather than installed into a computer from a removable recording medium. The computer is capable of receiving the program transferred in this manner, and installing the program in a recording medium such as a built-in hard disk.

Effects to be produced are not limited to those described in the present description, but may include additional effects not described. In addition, it should not be interpreted that the present technology be limited to the embodiment of the technology described herein. The embodiment of the present technology has been disclosed by way of example. It is therefore obvious that those skilled in the art can make modifications or substitutions of the embodiment without departing from the subject matters of the present technology. Accordingly, the scope of the claims should be considered in determining the subject matters of the present technology.

### [Industrial Applicability]

According to the traveling assistance device, the traveling assistance management device, methods of the same devices, and the traveling assistance system of this technology, the traveling control unit performs following traveling control for following a leading vehicle indicated by leading vehicle information acquired from the traveling assistance management device via the communication unit. The following traveling control is performed using outside-vehicle information acquired by the outside-vehicle information acquisition unit, and the leading vehicle information. Moreover, the information processing unit selects a vehicle, which is scheduled to travel in a traveling schedule route of a traveling assistance target vehicle at a traveling schedule time of the traveling assistance target vehicle, as the leading vehicle from candidate vehicles in response to a request for leading vehicle information from the assistance target vehicle, and notifies the traveling assistance target vehicle of the leading vehicle information indicating the leading vehicle. In this case, leading vehicle information indicating the front is appropriately acquired beforehand, wherefore road following traveling is automatically and efficiently achievable. Accordingly, front safety is secured beforehand by applying the present technology to platooning, wherefore the present technology is suitable for a system which requires reduction of a use amount of fuel and a generation amount of carbon dioxide by sufficient reduction of a distance between vehicles in platooning, and safe and highly convenient traveling assistance regardless of regions even without constant and permanent update of local dynamic map.

### [Reference Signs List]

- 10 ···: Traveling assistance system
- 11 ···: Traveling assistance target vehicle
- 12, 12-1 to 12-n ···: Candidate vehicle
- 12s ···: Leading Vehicle
- 15 ···: Traveling assistance management device
- 151 ···: Master server
- 152 ···: Local server (cloud server)
- 153 ···: Communication unit
- 154 ···: Incentive management server

## Claims

1. A traveling assistance device comprising:
an outside-vehicle information acquisition unit (7400, 7420) being configured to acquire outside-vehicle information, wherein the outside-vehicle information is information about the outside of a traveling assistance target vehicle (11);
a communication unit (153) being configured to communicate with a traveling assistance management device (15) providing leading vehicle information, wherein the leading vehicle information includes vehicle information regarding a candidate vehicle selected as leading vehicle (12s); and
a traveling control unit (7600) being configured to perform following traveling control for traveling while following the leading vehicle (12s) indicated by leading vehicle information acquired from the traveling assistance management device (15), the following traveling control being performed using the outside-vehicle information acquired by the outside-vehicle information acquisition unit (7400, 7420) and the leading vehicle information,
**characterized in that**
the traveling control unit (7600) is configured to set a new leading vehicle (12s) based on the leading vehicle information, and to perform the following traveling control in a case where the leading vehicle (12s) followed in the following traveling control deviates from a traveling schedule route.

2. The traveling assistance device according to claim 1, wherein
the communication unit (153) is configured to communicate with the leading vehicle (12s) indicated by the leading vehicle information, and
the traveling control unit (7600) is configured to acquire, via the communication unit (153), traveling environment information acquired by the leading vehicle (12s), and is configured to perform the following traveling control using the acquired traveling environment information.

3. The traveling assistance device according to any of claims 1 to 2, wherein the traveling control unit (7600) is configured to perform the following traveling control in accordance with a traveling schedule route, a traveling schedule time, and driver information.

4. The traveling assistance device according to any of claims 1 to 3, wherein the traveling control unit (7600) is configured to generate leading vehicle (12s) use information that indicates a use status of the leading vehicle (12s) used in the following traveling control.

5. The traveling assistance device according to any of claims 1 to 4, wherein the traveling control unit (7600) is configured to acquire traveling assistance information from outside via the communication unit (153), and is configured to perform assistance traveling control for traveling using the traveling assistance information at a time of determination that no leading vehicle (12s) is present based on the leading vehicle information during traveling in an assistance section requiring traveling assistance.

6. The traveling assistance device according to any of claims 1 to 5, wherein the traveling control unit (7600) performs autonomous traveling control for automatically traveling based on the outside-vehicle information acquired by the outside-vehicle information acquisition unit (7400, 7420) at a time of determination that no leading vehicle (12s) is present based on the leading vehicle information during traveling in a section not requiring traveling assistance.

7. A traveling assistance method comprising:
causing an outside-vehicle information acquisition unit (7400, 7420) to acquire outside-vehicle information, wherein the outside-vehicle information is information about the outside of a traveling assistance target vehicle (11);
causing a communication unit (153) to communicate with a traveling assistance management device (15) that provides leading vehicle information, wherein the leading vehicle information includes vehicle information regarding a candidate vehicle selected as leading vehicle (12s); and
causing a traveling control unit (7600) to perform, by using the outside-vehicle information acquired by the outside-vehicle information acquisition unit (7400, 7420) and the leading vehicle information acquired from the traveling assistance management device (15), following traveling control for traveling while following a leading vehicle (12s) indicated by the leading vehicle information,
**characterized in that** it is setting a new leading vehicle (12s) based on the leading vehicle information by the traveling control unit, and performing the following traveling control by the traveling control unit (7600) in a case where the leading vehicle (12s) followed in the following traveling control deviates from a traveling schedule route.

8. A traveling assistance system (10) comprising:
a traveling assistance device according to claim 1 that is provided on a traveling assistance target vehicle (11), and that is configured to perform traveling assistance; and
a traveling assistance management device (15) that is configured to manage the traveling assistance at a position away from the vehicle, wherein
the traveling assistance management device (15) includes
a communication unit (153) that is configured to communicate with the traveling assistance target vehicle (11), and
an information processing unit that is configured to select, as a leading vehicle (12s), a vehicle scheduled to travel in a traveling schedule route of the traveling assistance target vehicle (11) at a traveling schedule time of the traveling assistance target vehicle (11) from candidate vehicles (12-1,...,12-n) in response to a request for leading vehicle information from the traveling assistance target vehicle (11), and is configured to notify the traveling assistance target vehicle (11) of leading vehicle information indicating the leading vehicle (12s), **characterized in that** the traveling control unit (7600) is configured to set a new leading vehicle (12s) based on the leading vehicle information, and to perform the following traveling control in a case where the leading vehicle (12s) followed in the following traveling control deviates from a traveling schedule route.

## Patentansprüche

1. Fahrassistenzvorrichtung, umfassend:
eine Einheit (7400, 7420) zum Erfassen von Informationen außerhalb des Fahrzeugs, die konfiguriert ist, um Informationen außerhalb des Fahrzeugs zu erfassen, wobei die Informationen außerhalb des Fahrzeugs Informationen über die Außenseite eines Fahrassistenzzielfahrzeugs (11) sind;
eine Kommunikationseinheit (153), die konfiguriert ist, um mit einer Fahrassistenzverwaltungsvorrichtung (15) zu kommunizieren, die Führungsfahrzeuginformationen bereitstellt, wobei die Führungsfahrzeuginformationen Fahrzeuginformationen bezüglich eines Kandidatenfahrzeugs umfassen, das als Führungsfahrzeug (12s) ausgewählt ist; und
eine Fahrsteuereinheit (7600), die konfiguriert ist, um eine Folgefahrsteuerung zum Fahren auszuführen, während dem Führungsfahrzeug (12s) gefolgt wird, das durch Führungsfahrzeuginformationen angezeigt wird, die von der Fahrassistenzverwaltungsvorrichtung (15) erfasst werden, wobei die Folgefahrsteuerung unter Verwendung der Informationen außerhalb des Fahrzeugs, die durch die Einheit (7400, 7420) zum Erfassen von Informationen außerhalb des Fahrzeugs erfasst werden, und der Führungsfahrzeuginformationen durchgeführt wird,
**dadurch gekennzeichnet, dass**
die Fahrsteuereinheit (7600) konfiguriert ist, um basierend auf den Führungsfahrzeuginformationen ein neues Führungsfahrzeug (12s) festzulegen und die Folgefahrsteuerung in einem Fall durchzuführen, in dem das Führungsfahrzeug (12s), dem bei der Folgefahrsteuerung gefolgt wird, von einer geplanten Fahrroute abweicht.

2. Fahrassistenzvorrichtung nach Anspruch 1, wobei
die Kommunikationseinheit (153) konfiguriert ist, um mit dem Führungsfahrzeug (12s) zu kommunizieren, das durch die Führungsfahrzeuginformationen angezeigt wird, und
die Fahrsteuereinheit (7600) konfiguriert ist, um, über die Kommunikationseinheit (153), Fahrumgebungsinformationen zu erfassen, die durch das Führungsfahrzeug (12s) erfasst werden, und konfiguriert ist, um die Folgefahrsteuerung unter Verwendung der erfassten Fahrtumgebungsinformationen durchzuführen.

3. Fahrassistenzvorrichtung nach einem der Ansprüche 1 bis 2, wobei die Fahrsteuereinheit (7600) konfiguriert ist, um die Folgefahrsteuerung gemäß einer geplanten Fahrroute, einer geplanten Fahrzeit und Fahrerinformationen durchzuführen.

4. Fahrassistenzvorrichtung nach einem der Ansprüche 1 bis 3, wobei die Fahrsteuereinheit (7600) konfiguriert ist, um Verwendungsinformationen des Führungsfahrzeugs (12s) zu erzeugen, die einen Verwendungsstatus des Führungsfahrzeugs (12s) anzeigen, das bei der Folgefahrsteuerung verwendet wird.

5. Fahrassistenzvorrichtung nach einem der Ansprüche 1 bis 4, wobei die Fahrsteuereinheit (7600) konfiguriert ist, um Fahrassistenzinformationen von außen über die Kommunikationseinheit (153) zu erfassen, und konfiguriert ist, um eine Assistenzfahrsteuerung zum Fahren unter Verwendung der Fahrassistenzinformationen, zu einer Zeit der Bestimmung durchzuführen, dass kein Führungsfahrzeug (12s) vorhanden ist, basierend auf den Führungsfahrzeuginformationen während einem Fahren in einem Assistenzabschnitt, der Fahrassistenz erfordert.

6. Fahrassistenzvorrichtung nach einem der Ansprüche 1 bis 5, wobei die Fahrsteuereinheit (7600) eine autonome Fahrsteuerung zum automatischen Fahren basierend auf den Informationen außerhalb des Fahrzeugs, die durch die Einheit (7400, 7420) zum Erfassen von Informationen außerhalb des Fahrzeugs erfasst werden, zu einer Zeit der Bestimmung durchführt, dass kein Führungsfahrzeug (12s) vorhanden ist, basierend auf den Führungsfahrzeuginformationen während einem Fahren in einem Abschnitt, der keine Fahrassistenz erfordert.

7. Fahrassistenzverfahren, umfassend:
Veranlassen, dass eine Einheit (7400, 7420) zum Erfassen von Informationen außerhalb des Fahrzeugs Informationen außerhalb des Fahrzeugs erfasst, wobei die Informationen außerhalb des Fahrzeugs Informationen über die Außenseite eines Fahrassistenzzielfahrzeugs (11) sind;
Veranlassen, dass eine Kommunikationseinheit (153) mit einer Fahrassistenzverwaltungsvorrichtung (15) kommuniziert, die Führungsfahrzeuginformationen bereitstellt, wobei die Führungsfahrzeuginformationen Informationen bezüglich eines Kandidatenfahrzeugs einschließen, das als Führungsfahrzeug (12s) ausgewählt ist; und
Veranlassen einer Fahrsteuereinheit (7600), um unter Verwendung von Informationen außerhalb des Fahrzeugs, die durch die Einheit (7400, 7420) zum Erfassen von Informationen außerhalb des Fahrzeugs erfasst werden, und Führungsfahrzeuginformationen, die von der Fahrassistenzverwaltungsvorrichtung (15) erfasst werden, Folgefahrsteuerung zum Fahren durchzuführen, während einem Führungsfahrzeug (12s) gefolgt wird, das durch Führungsfahrzeuginformationen angezeigt wird,
**dadurch gekennzeichnet, dass** es
ein neues Führungsfahrzeug (12s) basierend auf den Führungsfahrzeuginformationen durch die Fahrsteuereinheit festlegt und die Folgefahrsteuerung durch die Fahrsteuereinheit (7600) in einem Fall durchführt, in dem das Führungsfahrzeug (12s), dem bei der Folgefahrsteuerung gefolgt wird, von einer geplanten Fahrroute abweicht.

8. Fahrassistenzsystem (10), umfassend:
eine Fahrassistenzvorrichtung nach Anspruch 1, die an einem Fahrassistenzzielfahrzeug (11) bereitgestellt ist und die konfiguriert ist, um eine Fahrassistenz durchzuführen; und
eine Fahrassistenzverwaltungsvorrichtung (15), die konfiguriert ist, um die Fahrassistenz an einer Position zu verwalten, die von dem Fahrzeug entfernt ist, wobei
die Fahrassistenzverwaltungsvorrichtung (15) einschließt
eine Kommunikationseinheit (153), die konfiguriert ist, um mit dem Fahrassistenzzielfahrzeug (11) zu kommunizieren, und
eine Informationsverarbeitungseinheit, die konfiguriert ist, um als ein Führungsfahrzeug (12s) ein Fahrzeug, das auf einer geplanten Fahrroute des Fahrassistenzzielfahrzeugs (11) zu einer geplanten Fahrzeit des Fahrassistenzzielfahrzeugs (11) geplant fahren soll, aus Kandidatenfahrzeugen (12-1, ..., 12-n) als Reaktion auf eine Anforderung für Führungsfahrzeuginformationen von dem Fahrassistenzzielfahrzeug (11) auszuwählen, und die konfiguriert ist, um das Fahrassistenzzielfahrzeug (11) zu Führungsfahrzeuginformationen zu benachrichtigen, die das Führungsfahrzeug (12s) anzeigen,
**dadurch gekennzeichnet, dass**
die Fahrsteuereinheit (7600) konfiguriert ist, um basierend auf den Führungsfahrzeuginformationen ein neues Führungsfahrzeug (12s) festzulegen und die Folgefahrsteuerung in einem Fall durchzuführen, in dem das Führungsfahrzeug (12s), dem bei der Folgefahrsteuerung gefolgt wird, von einer geplanten Fahrroute abweicht.

## Revendications

1. Dispositif d'aide au déplacement comprenant:
une unité d'acquisition d'informations d'extérieur de véhicule (7400, 7420) qui est configurée pour acquérir des informations d'extérieur de véhicule, dans lequel les informations d'extérieur de véhicule sont des informations concernant l'extérieur d'un véhicule cible d'aide au déplacement (11);
une unité de communication (153) qui est configurée pour communiquer avec un dispositif de gestion d'aide au déplacement (15) fournissant des informations de véhicule de tête, dans lequel les informations de véhicule de tête comportent des informations de véhicule concernant un véhicule candidat sélectionné en tant que véhicule de tête (12s); et
une unité de commande de déplacement (7600) qui est configurée pour effectuer une commande de déplacement de suivi pour un déplacement tout en suivant le véhicule de tête (12s) indiqué par les informations de véhicule de tête acquises par le dispositif de gestion d'aide au déplacement (15), la commande de déplacement de suivi étant effectuée à l'aide des informations d'extérieur de véhicule acquises par l'unité d'acquisition d'informations d'extérieur de véhicule (7400, 7420) et des informations de véhicule de tête,
**caractérisé en ce que**
l'unité de commande de déplacement (7600) est configurée pour définir un nouveau véhicule de tête (12s) sur la base des informations de véhicule de tête, et pour effectuer la commande de déplacement de suivi dans un cas où le véhicule de tête (12s) suivi dans la commande de déplacement de suivi s'écarte d'un itinéraire programmé de déplacement.

2. Dispositif d'aide au déplacement selon la revendication 1, dans lequel
l'unité de communication (153) est configurée pour communiquer avec le véhicule de tête (12s) indiqué par les informations de véhicule de tête, et
l'unité de commande de déplacement (7600) est configurée pour acquérir, par l'intermédiaire de l'unité de communication (153), des informations d'environnement de déplacement acquises par le véhicule de tête (12s), et est configurée pour effectuer la commande de déplacement de suivi à l'aide des informations d'environnement de déplacement acquises.

3. Dispositif d'aide au déplacement selon l'une quelconque des revendications 1 à 2, dans lequel l'unité de commande de déplacement (7600) est configurée pour effectuer la commande de déplacement de suivi en fonction d'un itinéraire programmé de déplacement, d'une heure programmée de déplacement, et d'informations de conducteur.

4. Dispositif d'aide au déplacement selon l'une quelconque des revendications 1 à 3, dans lequel l'unité de commande de déplacement (7600) est configurée pour générer des informations d'utilisation de véhicule de tête (12s) qui indiquent un état d'utilisation du véhicule de tête (12s) utilisées dans la commande de déplacement de suivi.

5. Dispositif d'aide au déplacement selon l'une quelconque des revendications 1 à 4, dans lequel l'unité de commande de déplacement (7600) est configurée pour acquérir des informations d'aide au déplacement de l'extérieur par l'intermédiaire de l'unité de communication (153), et est configurée pour effectuer une commande d'aide au déplacement à l'aide des informations d'aide au déplacement à un moment où il est déterminé qu'aucun véhicule de tête (12s) n'est présent sur la base des informations de véhicule de tête pendant le déplacement dans une section d'aide nécessitant une aide au déplacement.

6. Dispositif d'aide au déplacement selon l'une quelconque des revendications 1 à 5, dans lequel l'unité de commande de déplacement (7600) effectue une commande de déplacement autonome pour se déplacer automatiquement sur la base des informations d'extérieur de véhicule acquises par l'unité d'acquisition d'informations d'extérieur de véhicule (7400, 7420) à un moment où il est déterminé qu'aucun véhicule de tête (12s) n'est présent sur la base des informations de véhicule de tête pendant le déplacement dans une section ne nécessitant pas d'aide au déplacement.

7. Procédé d'aide au déplacement comprenant:
le fait d'amener une unité d'acquisition d'informations d'extérieur de véhicule (7400, 7420) à acquérir des informations d'extérieur de véhicule, dans lequel les informations d'extérieur de véhicule sont des informations concernant l'extérieur d'un véhicule cible d'aide au déplacement (11);
le fait d'amener une unité de communication (153) à communiquer avec un dispositif de gestion d'aide au déplacement (15) qui fournit des informations de véhicule de tête, dans lequel les informations de véhicule de tête comportent des informations de véhicule concernant un véhicule candidat sélectionné en tant que véhicule de tête (12s); et
le fait d'amener une unité de commande de déplacement (7600) à effectuer, à l'aide des informations d'extérieur de véhicule acquises par l'unité d'acquisition d'informations d'extérieur de véhicule (7400, 7420) et des informations de véhicule de tête acquises par le dispositif de gestion d'aide au déplacement (15), une commande de déplacement de suivi pour se déplacer tout en suivant un véhicule de tête (12s) indiqué par les informations de véhicule de tête,
**caractérisé par le fait qu'**il
définit un nouveau véhicule de tête (12s) sur la base des informations de véhicule de tête fournies par l'unité de commande de déplacement, et
effectue la commande de déplacement de suivi par l'unité de commande de déplacement (7600) dans un cas où le véhicule de tête (12s) suivi dans la commande de déplacement de suivi s'écarte d'un itinéraire programmé de déplacement.

8. Système d'aide au déplacement (10) comprenant:
un dispositif d'aide au déplacement selon la revendication 1 qui est fourni sur un véhicule cible d'aide au déplacement (11), et qui est configuré pour effectuer une aide au déplacement; et
un dispositif de gestion d'aide au déplacement (15) qui est configuré pour gérer l'aide au déplacement à une position éloignée du véhicule, dans lequel
le dispositif de gestion d'aide au déplacement (15) comporte
une unité de communication (153) qui est configurée pour communiquer avec le véhicule cible d'aide au déplacement (11), et
une unité de traitement d'informations qui est configurée pour sélectionner, en tant que véhicule de tête (12s), un véhicule programmé pour se déplacer sur un itinéraire programmé de déplacement du véhicule cible d'aide au déplacement (11) à une heure programmée de déplacement du véhicule cible d'aide au déplacement (11) parmi des véhicules candidats (12-1,..., 12-n) en réponse à une demande d'informations de véhicule de tête émanant du véhicule cible d'aide au déplacement (11), et est configurée pour notifier au véhicule cible d'aide au déplacement (11) les informations de véhicule de tête indiquant le véhicule de tête (12s),
**caractérisé en ce que**
l'unité de commande de déplacement (7600) est configurée pour définir un nouveau véhicule de tête (12s) sur la base des informations de véhicule de tête, et pour effectuer la commande de déplacement de suivi dans un cas où le véhicule de tête (12s) suivi dans la commande de déplacement de suivi s'écarte d'un itinéraire programmé de déplacement.
